# EUROPEAN PATENT APPLICATION

(11) **EP 3 923 607 A1**
(43) Date of publication of application: **15.12.2021**
(21) Application number: 21187383.1
(22) Date of filing: 15.06.2017
(51) Int. Cl.: H04W 4/50, H04W 4/70, H04W 8/26, H04W 12/06, H04W 12/30, H04W 60/04, H04W 88/14

(54) **SERVICES PROVISIONING FOR INTERNET-OF-THINGS DEVICES IN CELLULAR NETWORKS**

(30) Priority: 15.06.2016 US 201662350523 P; 29.07.2016 US 201662368723 P; 11.11.2016 US 201662421088 P
(62) Divisional of application: 17814094.3
(71) Applicant: Apple Inc., Cupertino CA 95014 (US)
(72) Inventor: LIAO, Ching-YU, Cupertino 95014 (US); CHEN, Kuilin Clark, Cupertino 95014 (US); MACIOCCO, Christian, Cupertino 95014 (US); SUNDER RAJAN, Ashok, Cupertino 95014 (US)
(74) Representative: Wardle, Callum Tarn

(57) **Abstract**

Methods and apparatus are described by which a network controller receives an attach request from a first user equipment (UE). The attach request including a requested IP service. A group of IP addresses for the IP service is allocated. A routing policy is configured for the group of IP addresses. The routing policy is sent to a RAN node and a data gateway. The routing policy indicates a route for data packets, from UEs using the requested IP service, received at the RAN node to the data gateway. A mapping between the service identifier and the group of IP addresses is stored.

## Description

### Priority Claim

This application claims priority to United States Provisional Patent Application Serial No. 62/350,523 filed June 15, 2016, entitled "INTERNET PROTOCOL SERVICES PROVISIONING FOR MASSIVE INTERNET-OF-THINGS DEVICES IN CELLULAR NETWORKS," United States Provisional Patent Application Serial No. 62/368,723 filed July 29, 2016, entitled "SECURITY MECHANISMS IN SOFTWARE DEFINED NETWORKING BASED MOBILE NETWORK," and United States Provisional Patent Application Serial No. 62/421,088 filed November 11, 2016, all of which are incorporated herein by reference in their entirety.

### Technical Field

Embodiments described herein relate generally to provisioning user equipment for internet protocol services in a cellular environment.

### Background

In legacy third generation partnership project (3GPP) evolved packet systems, provisioning internet protocol (IP) services for a user equipment (UE) involves setting up a GPRS tunneling protocol (GTP) between an enhanced Node B (eNodeB), a serving gateway (SGW), and a packet network gateway (PGW). User data is carried via the GTP and the PGW allocates an IPv4 address and/or an IPv6 prefix to the registered UE during the session setup procedure. This setup procedure has significant overhead when setting up IP services for multiple UEs. In addition, this setup procedure is tailored for a UE requesting services without specific quality of service parameters. When many UEs request IP services, the signaling overhead generated in the Evolved Packet Core (EPC) for session management becomes significant in regards to resource consumption. In addition, certain types of UEs, such as internet-of-things (IoT) devices, do not need an always-on connection to complete transmission tasks so such overhead becomes undesirable.

The present disclosure relates to procedures for provisioning UEs for IP services.

### Brief Description of the Drawings

FIG. 1 is a block diagram of a software defined network architecture according to some embodiments described herein.
FIG. 2 is a message flow diagram for provisioning two devices in a software managed network according to some embodiments described herein.
FIG. 3 is a flow diagram of a process flow for provisioning a device at a network controller according to some embodiments described herein.
FIG. 4 is a flow diagram of a process flow for provisioning a device at a radio access network node according to some embodiments described herein.
FIG. 5 illustrates an architecture of a system 500 of a network in accordance with some embodiments.
FIG. 6 illustrates example components of a device 600 in accordance with some embodiments.
FIG. 7 illustrates example interfaces of baseband circuitry in accordance with some embodiments.
FIG. 8 is an illustration of a control plane protocol stack in accordance with some embodiments.
FIG. 9 is an illustration of a user plane protocol stack in accordance with some embodiments.
FIG. 10 illustrates components of a core network in accordance with some embodiments.
FIG. 11 is a block diagram illustrating components, according to some example embodiments, of a system 1100 to support NFV.
FIG. 12 is a block diagram illustrating components, according to some example embodiments, able to read instructions from a machine-readable or computer-readable medium (e.g., anon-transitory machine-readable storage medium) and perform any one or more of the methodologies discussed herein.
FIG. 13 is a message flow diagram for user plane traffic handling in a network slice according to some embodiments described herein.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

### Detailed Description

A reference system architecture based on Software Defined Networking (SDN) has been recommended for the next generation mobile network. With the principle of the separation of the control plane and user plane entities in SDN, the control plane functions, e.g., IP address allocation, are merged into a centralized control plane entity, a.k.a. SDN based network controller (SNC) in a SDN based mobile network (SMN). Based on real time network information, the SNC can configure one or more Data Gateways (DGWs) in the user plane to forward IP packets. While this architecture is designed with traditional UE like smartphones in mind, the architecture requires the use of a compute and resource intensive control plane on both the device and the network. Accordingly, this architecture presents significant challenges for upcoming usage models that support a large number of devices that may have limited computing and energy resources. An example of such devices are IoT devices. The signaling overhead for proposed architectures may also prove problematic for such devices.

Example IoT devices include water/electric meters, body health meters, etc. These devices may transmit infrequently and for limited periods of time. Setting up PDN connections to maintain tunnels, authentication, etc. for these devices is wasteful. This disclosure presents an architecture to support a large number of devices, such as IoT devices, in a core network by provisioning IP services to the devices with reduced overhead that leads to lower compute and energy resources at both the device and the core network.

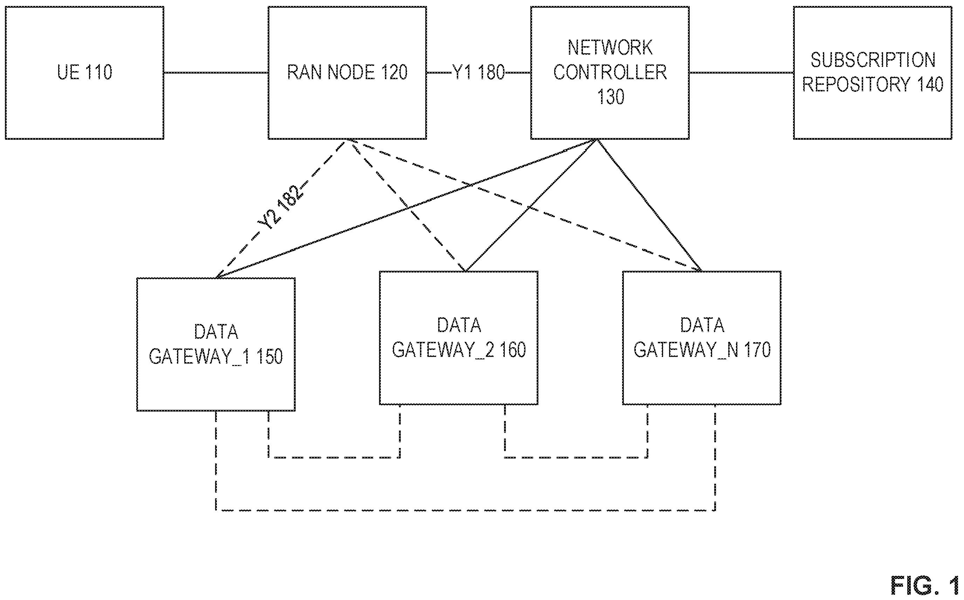

FIG. 1 is a block diagram of a software defined network architecture according to some embodiments described herein. A user equipment (UE) 110 may use a network to access various IP services. The architecture of the network may be a SDN based network that may separate the control plane and the user plane entities and/or functions. A tunnel-less transmission may be used for provisioning IP services for various devices, thereby, reducing messaging overhead for provisioning IP services. The UE 110 may access the network via a radio access network (RAN) node 120. The RAN node 120 may communicate with a network controller 130 to request IP services provisioning for the UE 110. The network controller 130 may be a SDN based network controller. The network controller 130 may communicate with a subscription repository 140 to authenticate the UE 110. The subscription repository 140 may store device and service subscription information.

In various embodiments, a requested IP service may be provisioned by the RAN node 120, the network controller 130, or a combination of the RAN node 120 and the network controller 130. IP service provisioning includes allocating a group of IP addresses. For example, a pool of IPv4 addresses and/or an IPv6 prefix may be allocated for a requested IP service. In an embodiment, the group of IP addresses may be preconfigured by a mobile network operator (MNO). The preconfigured group of IP addresses may be stored in the subscription repository 140, at the network controller 130, or the RAN node 120. If the RAN node allocates the group of IP addresses, the RAN node 120 may request the group of IP addresses from the network controller 130. The network controller 130 may request the group of IP addresses from the subscription repository 140. The requested IP service may be identified by the allocated group of IP addresses. The IP address of a packet may be used to identify a received packet and to determine which routing policy to use to forward the packet to the appropriate data gateway.

The network controller 130 may also configure one or more data gateways 150, 160, and 170 for the requested IP service in a particular packet data network (PDN). The routing policies may be based on information regarding the PDN. As part of the data gateway configuration, the network controller 130 may provide routing policies to the RAN node 120 or directly to the data gateways 150, 160, and 170. If the RAN node 120 receives the routing policies, the RAN node 120 may provide the routing policies to the data gateways 150, 160, and 170.

In an example, the routing policies for a particular IP service and/or PDN may have multiple routing policies. Each routing policy may have an associated weight used for load balancing. In an example, the RAN node 120 enforces the load balancing by distributing data packets associated with the IP service per the weights of the various routing policies. In an example, the weights associated with each routing policy may be based upon current load values of the data gateways 150, 160, and 170. The network controller 130 may update the weights based upon updated load data received from the data gateways 150, 160, and 170. As a specific example, the routing policies for a specific IP service may indicate that the data gateway 150 has a weighting factor of 80% and the data gateway 160 has a weighting factor of 20%. The RAN node 120 may then forward 80% of packets associated with the IP service to the data gateway 150 and 20% of the packets associated with the IP service to the data gateway 160. In this example, data gateway 170 is not used for the requested IP service.

The updated routing policies may then be sent to the RAN node 120 and may also be sent to the data gateways 150, 160, and 170. The network controller 130 may reconfigure a data gateway with one or more of the following: access point name (APN) of the PDN, service/application identifier, IPv4 addresses for the IP service, IPv6 prefix for the IP service, designated data gateway address, and/or data gateway identifier. Reconfiguration of a data gateway may occur using the Y3 interface 183.

When the UE 110 requests a particular IP service, the UE may have to be authenticated. In an example to reduce messaging overhead, the network controller 130 may request the authentication parameters from the subscription repository 140 for the IP service. The authentication parameters may be sent from the network controller 130 to the RAN node 120. When a second UE request the IP service, the RAN node 120 may authenticate the second UE without involving the network controller 130 or the subscription repository 140. In an example, the network controller 130 may authenticate the second UE without involving the subscription repository 140. In this example, the RAN node 120 sends the network controller 130 the service request or attach request from the second UE. In an example, the requested IP service is for connectionless transmission services. In an example, the network controller 130 sends a shared group context of the requested IP service to the RAN node 120, wherein the shared group context includes at least of the following information: the routing policies, the authentication security parameters, the allocated a group of IP addresses, including a pool of IPv4 addresses and/or an IPv6 prefix, and the validity timer for the service group.

In an example, the UE 110 may attach to the network for an IP service without creating an individual IP session. Once the group of IP addresses has been allowed, either the RAN node 120 or the network controller 130 may provide the UE 110 with an IP address via a Layer 2 or Layer 3 message. For example, when the UE 110 performs an attach request or a service request, the RAN node 120 or the network controller 130 may provide the UE 110 with an IP address based upon receiving the request. In an example, an allocated IPv6 prefix may be sent to the UE using a Layer 3 message, such as a non-access stratum (NAS) message, from the network controller 130 or a Layer 2 message,such as a radio resource control (RRC) message, from the RAN node 120. In an example, the UE may configure its IP address with the IPv6 prefix.

Once the routing policy for an IP service has been configured, the UE 110 may send IP packets to the RAN node 120. The RAN node 120 may then forward the IP packets received from the UE 110 to the appropriate data gateway 150, 160, or 170. The data gateway may then forward the IP packet to another data gateway or an application server. The IP packets are forwarded/routed based upon the routing policy provided by the network controller 130 as part of provisioning the IP service.

When the UE 110 completes its data transmission, the UE 110 may mark the last data packet, e.g., an IP packet, with an end mark in the header to notify the RAN node 120 that the UE 110 has completed its data transmission. The UE 110 may detach itself from the network without sending any deregistration messages. The RAN node 120 may act when the end mark is received. For example, the RAN node 120 may release any resources attached with the IP service. In an example, the RAN node 120 does not take any action and the resources associated with the IP service remain active for a period of validity time. The UE 110 may send another attach request or service request to once again use the IP service. Upon receipt of this request, the RAN node 120 may determine the group of IP addresses are still valid and allow the UE 110 to use an address from the group of IP addresses.

As part of the disclosed architecture, control plane signaling messages may be separated from the user plane data traffic. In FIG. 1, the control plane interface is shown with solid lines and the user plane interface is shown with dash lines. A Y1 interface 180 in the control plane interface may be between the RAN node 120 and the network controller 130. A Y3 interface 183 in the control plane interface may be between the network controller 130 and data gateways 150, 160, or 170. To support the requested IP service, there may be one or more connections over a Y2 interface 182 in the user plane between the RAN node 120 and one or more data gateways 150.

The control plane and the user plane may be separated in various ways. For example, the network controller 130 may determine the routing policies for the requested IP service. In addition, the network controller 130 may configure the data gateways 150, 160, and 170 with the routing policies. In addition, the routing policies may be updated by the network controller 130. In an example, the routing policies are provided to the RAN node 120.

Once an IP service is provisioned, the RAN node 120 receives IP packets from the UE 110 and other UEs that are provisioned for the IP service. The RAN node 120 identifies IP packets that are for the user plane. The RAN node 120 may then route these IP packets based upon the routing policies provided by the network controller 130. For example, the RAN node 120 may forward an IP packet to one or more data gateways 150, 160, or 170 based upon the routing policies. In an example, packets are routed to a data gateways based on APN information of a particular PDN and/or service/application identifier. The data gateways 150, 160, or 170 may then forward the IP packet to the next data gateway or packet data network as configured by the routing policies. In addition, the data gateways 150, 160, and 170 may provide network load information to the network controller 130. The network controller 130 may use the network load information to update routing policies.

Based on the architecture shown in FIG. 1, the network controller 130 may configure one or more data gateways 150, 160, and 170 with the routing policies to reflect the real-time network loads and network configurations. The data gateways 150, 160, and 170 may accommodate the user plane traffic with non-IP or IP packets. The destination of the packets to be forwarded at data gateway 150, 160, and 170, or the RAN node 120 may be identified by an identifier for traffic carrying either IP packets or non-IP packets. For the IP packets, the network controller 130 may allocate an IP address for the requested IP service, in which the IP address is used to identify the IP packets at the data gateway 150, 160, and 170 and the RAN node 120. The IP address may be preserved for the life time of all the requested IP services by the network controller 130. For example, the network controller 130 may change the boundary data gateway which is interfacing with an external packet data network (PDN, associated to an Access Point Name) within the same service domain and may share the same IP domains in the IP pools. As another example, the network controller 130 may maintain a mapping table for the changes of the IP domains if the boundary data gateway is not within the same IP domains in the IP pools. For the non-IP packets, an identifier is used to identify the non-IP packets at the data gateway 150, 160, and 170 and the RAN node 120, in which the UE is allocated with the identifier for the requested service and marks the Non-IP packets for the user plane traffic transmission. In an example, if the service is for a Non-IP service, the RAN node 120 or the network controller 130 may provide the UE 110 with a service indicator via a Layer 2 or Layer 3 message. In this example, the UE 110 may configure its corresponding service with the service indicator.

As noted above, provisioning an IP service may be done by the network controller 130, the RAN node 120, or a combination of the two. In an example, the network controller 120 provisions the requested IP service with a PDN identified by an access point name (APN). The network controller 130 may allocate IPv4 addresses or an IPv6 prefix for the requested IP service. A public land mobile network (PLMN) may provide the IPv4 addresses or the IPv6 prefix. In another example, the network controller 130 may be a Dynamic Host Configuration Protocol (DHCP) client, thereby, obtaining the IPv4 addresses or the IPv6 prefix from a DHCP server. The requested IP service may be identified by a service identifier and/or an application identifier. The subscription repository 140 may store the identifier along with the authentication parameters for the IP service. Once the group of IP addresses is allocated, the group of IP addresses may be associated with the service identifier or the application identifier. The network controller 130 may use the group of IP addresses for future UEs that request the IP service associated with the service identifier/application identifier. In an example, the mapping between the service identifier/application identifier and the group of IP addresses is stored at the network controller 130.

The network controller 130 may also determine the routing policies for the requested IP service. The routing policies may be sent to the data gateways 150, 160, and 170. The data gateways 150, 160, and 170 are able to configure themselves based upon the received routing policies. The routing policies may also be sent to the RAN node 120. In addition, the network controller 130 may authenticate a request for an IP service. In an example, the subscription repository 140 provides authentication parameters when the IP service is first provisioned. The UE 110 may be authenticated for the IP service using the authentication parameters. The authentication parameters may be stored at the network controller 130 and used to authenticate future requests for the IP service. The network controller 130 may also use a validity timer. When an IP service is first provisioned, a validity timer may be started. The group of IP addresses is valid until the expiration of the validity timer. When a UE requests a previously provisioned IP service, the validity timer may be checked to determine the group of IP addresses are still valid. If not, the IP service may be reprovisioned.

In an example, the RAN node 120 may provision the requested IP service. In this example, the RAN node 120 allocate IPv4 addresses or an IPv6 prefix for the requested IP service. A public land mobile network (PLMN) may provide the IPv4 addresses or the IPv6 prefix. In another example, the RAN node 120 may be a Dynamic Host Configuration Protocol (DHCP) client, thereby, obtaining the IPv4 addresses or the IPv6 prefix from a DHCP server. The RAN node 120 may send a service request message to the network controller 120 indicating the IPv4 addresses or the IPv6 prefix with the PDN information for the requested IP service.

The RAN node 120 may determine range of IPv4 addresses and/or the size of the IPv6 prefix to use for an IP service. In an example, the RAN node 120 may estimate the number of devices that will use the IP service and base the size of the group of IP addresses based upon this estimation. For example, the RAN node 120, the network controller 130, or the subscription repository 140 may include data that provides an estimation of the number of devices. In an example, historical data regarding the number of UE requesting the IP service may be used to estimate the number of device. In addition, the time of day, day of the week, current loads of other IP services may also be used to determine the estimation of the number of devices. In an example, the network controller 130 estimates the number of devices that may use the requested IP service. The network controller 130 may then determine the size of the group of IP addresses or provide the estimation to the RAN node 120.

The requested IP service may be identified by a service identifier and/or an application identifier. The subscription repository 140 may store the identifier along with the authentication parameters for the IP service. Once the group of IP addresses is allocated, the group of IP addresses may be associated with the service identifier or the application identifier. The RAN node 120 may use the group of IP addresses for future UEs that request the IP service associated with the service identifier/application identifier. In an example, the mapping between the service identifier/application identifier and the group of IP addresses is stored at the RAN node 120. In another example, the mapping is stored at the network controller 130.

As noted above, the UE 110 may be authenticated for the IP service using the authentication parameters. The authentication parameters may be received from the network controller 130 and used to authenticate future requests for the IP service. The RAN node 120 may use a validity timer to determine if a group of IP addresses is still valid. When an IP service is first provisioned, the validity timer may be started. The group of IP addresses is valid until the expiration of the validity timer. When a UE requests a previously provisioned IP service, the validity timer may be checked to determine the group of IP addresses are still valid. If the group of IP addresses is still valid, the RAN node 120 may use the group of IP addresses to provide an IP address to the requesting UE. If group of IP addresses is no longer valid, the IP service may be reprovisioned. In an example, the UE 110 that requests for the same IP service shares the same authentication parameters as a service group. In this example, the network controller 130 sends a shared group context of the requested IP service to the RAN node 120, wherein the shared group context includes at least of the following information: the routing policies, the authentication security parameters, the allocated a group of IP addresses, including a pool of IPv4 addresses and/or an IPv6 prefix, and the validity timer for the service group.

The RAN node 120 may also request the network controller 130 notify the RAN node 120 of the routing policies associated with the requested IP service. The request may include the service/application ID along with the PDN for the IP service. In an example, the network controller 130 provides the updates periodically, regardless, of changes to the routing policies. In another example, the network controller 130 only provides updates for active IP services whose routing policies have changed. In an example, the network controller 130 provides a periodic update of the routing policies to the RAN node 120 without the RAN node 120 first requesting updates.

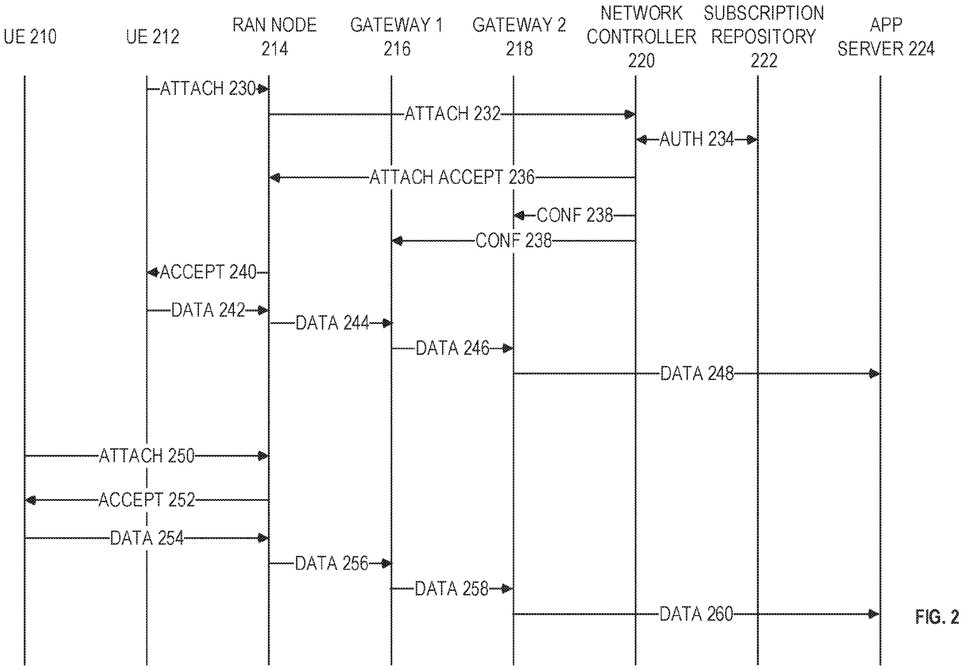

FIG. 2 is a message flow diagram for provisioning two devices in a software defined network according to some embodiments described herein. When a UE 212 would like to access an IP service, the UE 212 may send an attach request to a RAN node 214. The attach request includes an indication of the IP service requested by the UE 212 and may also include a device identifier. Upon receipt, the RAN node 214 determines if there are valid routing policies for the requested IP service. In addition, the RAN node 214 may determine if there are valid service authentication parameters that may be used to authenticate the UE 212. If there are no related routing policies, a service request message or an attach request message 232 is sent to a network controller 220, such as a software network controller. The network controller 220 may perform an authentication procedure 234 to determine if the UE 212 is allowed to access the requested IP service. The network controller 220 may access a subscription repository 222 to retrieve authentication parameters. If the UE 212 is allowed to access the IP service, a group of IP addresses to use with the IP service may be allocated. As part of the allocation process, the network controller 220 may determine the size of the group of IP addresses. For the example, the size of the group of IP addresses may be based on an estimated number of UEs that will use the IP service.

An attach accept message 236 may be sent to the RAN node 214 from the network controller 220. The attach accept message may include SDN routing policies, the group of IP addresses to use for the requested IP service, and/or authentication parameters. The network controller 220 may also send configure message 238 to data gateway 216 and data gateway 218 with the routing policies for the IP service.

The RAN node 214 may store the information in the attach accept message for future use. The RAN node 214 may also send the UE 212 an attach accept message indicating the IP service is available. In an example, the network controller 220 may send the UE 212 the attach accept message. The attach accept message may include the IPv6 prefix or an IPv4 address for the UE 212 to use.

Once the UE has an IP address, the UE may transmit data 242 to the RAN node 214. The RAN node 214 determines the packet is part of the IP service and uses the routing policies associated with the IP service to route the packet to a data gateway 216. In the illustrated example, the data gateway 216 uses the routing policies to route the packet 244 to the data gateway 218. The data gateway 218 also uses the routing policies for the IP service to route the packet 248 to an application server 224. Thus, data packets from the UE 212 reach an application server 224 that provides data related to the IP service. When the UE 212 finishes transmitting packets, the UE 212 may detach from the network or may enter idle mode. In an example, the UE 212 may enter a power saving mode to save battery power when the data transmission is over.

When a second UE 210 would like to use the IP service, the UE 210 may be provisioned using less resources than a full provision. The UE 210 may send an attach request 250 requesting the IP service. In an example, the RAN node 214 may authenticate the UE 210 using the previously received authentication parameters. In an example, the attach request may be sent to the network controller 220 that authenticates the UE 210. In this example, the UE 210 may be authenticated without accessing the subscription repository 222. Once authenticated an accept message 252 may be sent to the UE 210. The UE 210 may auto-configure its IPv6 address or be allocated an IPv4 address in the accept message 252. Once accepted, the UE 210 may send data 254 via the RAN node 214. The RAN node 214 routes the packet 256 using the routing policies to the gateway 216, which routes 258 the packet to the gateway 218. The gateway 218 may then route 260 the data to the application server 224.

In an example, the RAN node 214 may have multiple routing policies for the IP service. For example, each routing policy may have a weight associated with the policy that is used to distribute data packets. For example, the RAN node 214 may distribute packet to the gateway 216 and the gateway 218 based on the weights.

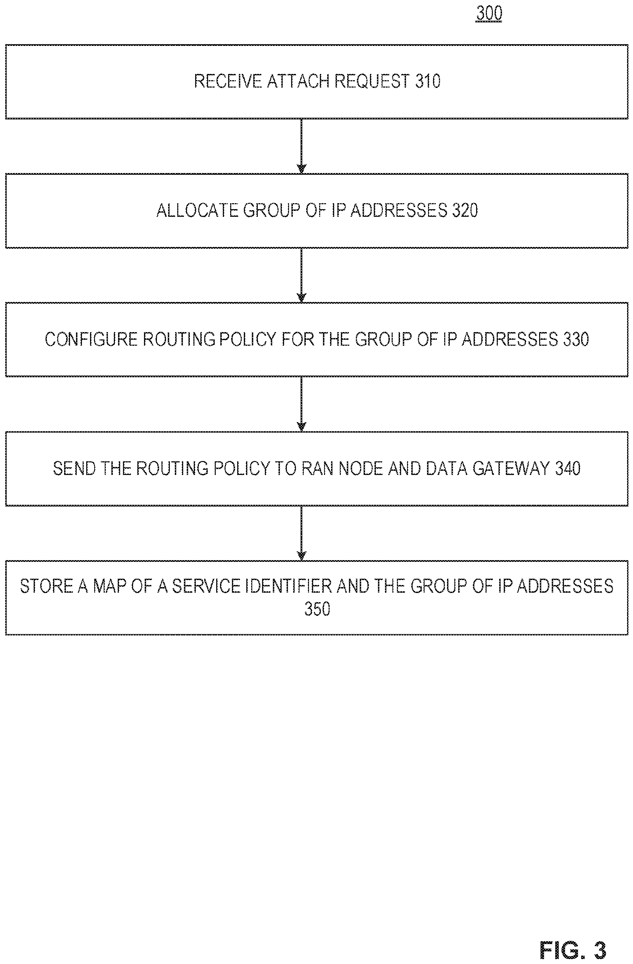

As described above, the IP provisioning services may be located in a network controller, a RAN node, or a combination of both. FIG. 3 is a flow diagram of a process flow 300 for provisioning a device at a network controller according to some embodiments described herein. The process flow 300 may be executed on a computing device. At step 310, the network controller receives an attach request 310. The attach request may originally be sent by a UE to a RAN node, and then to the network controller from the RAN node. The attach request may include a requested IP service. Alternatively, the network controller checks with subscription repository for obtaining the subscribed IP service. At step 320, the network controller allocates a group of IP addresses for use with the IP service. In an example, the group of IP addresses is a pool of IPv4 addresses. The group of IP addresses may also be an IPv6 prefix. At step 330, the network controller configures a routing policy for the IP service. The routing policy may include different routing policies for different data gateways. In an example, there may be different routing policies each of which is associated with a weight. The weights may be used to distribute packets to different data gateways. At step 340, the routing policy is sent to the RAN node and to a data gateway. In an example, the routing policy is sent to multiple different data gateways. The routing policy is used to forward/route data packets of the IP service. At 350 the network controller stores a map of a service identifier or application identifier associated with the IP service and the group of IP addresses. Later, when another UE requests the same IP service, the map may be used to determine that a group of IP addresses have already been allocated for the IP service. In an example, an IP address or IP address prefix for the IP service may be selected for the IP service using the group of IP addresses from the map.

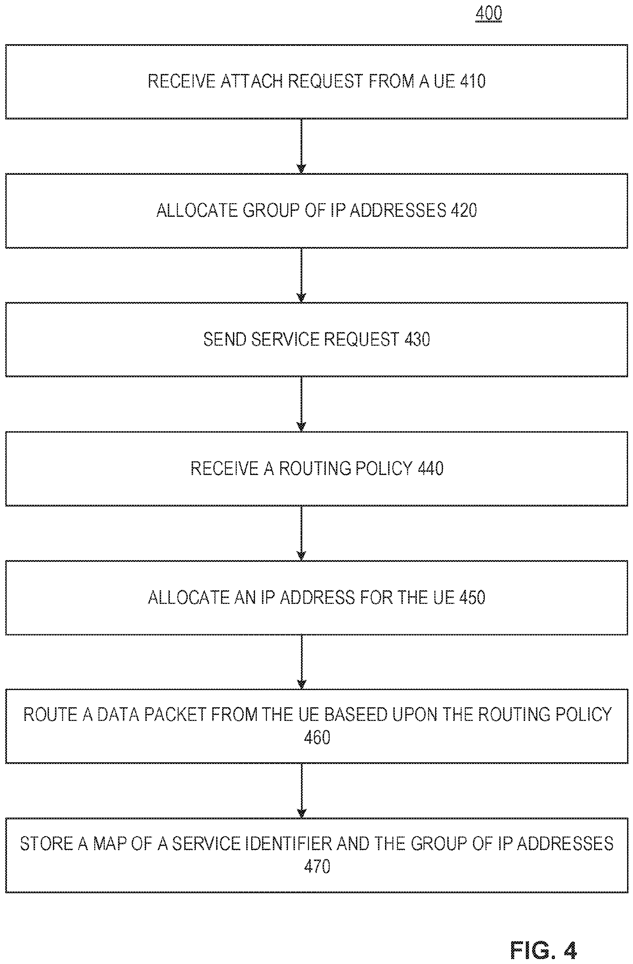

FIG. 4 is a flow diagram of a process flow for provisioning a device at a radio access network (RAN) node according to some embodiments described herein. The process flow 400 may be executed on a computing device. At step 410, the RAN node receives an attach request or a service request from a UE. The service request may include an indication of a requested IP service. The RAN node may determine if a group of IP addresses associated with the requested IP service has previously been allocated. The RAN node may also determine if the previously allocated group of IP addresses is still valid. If there are no valid group of IP of addresses for the IP service, the RAN node allocates a group of IP addresses, as 420. The group of IP addresses may be a pool of IPv4 addresses and/or a IPv6 prefix. At 430, the RAN node sends a service request to the network controller indicating the requested IP service.

At 440, based upon sending the service request, the RAN node receives a routing policy from the network node. At 450, the RAN node may allocate an IP address for the UE for accessing the IP service. In an example, the IP address allocated is an IPv4 address. In an example, the RAN node sends an IPv6 prefix to the UE, and the UE may configure an IP address to use based upon the IPv6 prefix. Once an IP address has been configured at the UE, the UE may send/receive data packets associated with the requested IP address. At 460, the RAN node receives a data packet from the UE and routes the data based upon the received routing policy. At 470, the RAN node may store a mapping of the service identifier/application identifier of the IP service and the group of IP addresses. This mapping may be used by the RAN node when a new UE or a detached UE requests to access the IP service.

To support multiple devices efficiently, authentication and security features may be changed. A software defined network may include a Service Portal Function (SPF), a Service Capability Server/Application Server (SCS/AS), a SDN-based Network Controller (SNC), a Radio Access Network (RAN) node, and one or more Data Gateways (DGWs). The network entities in the SDN-based mobile network architecture may support various features. The Service Portal Function (SPF) may interface with one or more RAN nodes over Z3 interface, and gather RAN layer related information. The SPF may also interface with one or more SDN-based network controllers (SNCs) over Z4 interface, and allocate one or more SNC to locally manage the routing policies for transmitting user plane traffic. In addition, the SPF may interface with a service capability server (SCS) and/or one or more application servers (AS) in the northbound over interface Z5 to provide access towards a mobile device in the SDN-based mobile network. In an example, the SPF may also interface with subscription repository overZ6b interface to retrieve/store the service related information, e.g. subscription, parameters of service profile. The SPF may also support Service Capability Exposure Function (SCEF) function for interfacing with SCS/AS over Z8 interface; and authorize the service requested by a mobile device over Z3/Z4 interface and/or by SCS/AS over Z8 interface.

The Service Capability Server/Application Server (SCS/AS) may provide service for a mobile device in a SDN-based mobile network over interface Z8; and interface with Service-IWF to get authorization of the services and system information in the SMN. The SCS/AS may also handle the services provided by one or more application servers directly or via SCS.

The SDN-based Network Controller (SNC) may be connected with SPF in the northbound over interface Z3 to communicate with a SCS/AS(s); and be connected with one or more data gateways (DGWs) in the southbound over Z5 interface, and provide routing policies to one or more DGWs so as to provision requested service for IoT devices. The SNC may also provide the RAN node the information of the configured flow profile as well as the routing policies indicating the entry DGW address per flow; and interface with subscription repository over Z6a interface to retrieve/update the service related subscription information locally. As described above, the SNC may also allocate IP addresses of the requested services in the service domains within the SMN, and preserves the allocated IP addresses of the requested service for the mobile device.

The RAN node may store the received configured flow profile and the corresponding routing policies per flow of the service identified by a service identifier; and identify the received user-plane traffic sending from a mobile device based on the stored flow profile for a service. The RAN node may also forward user-plane traffic towards one or more DGWs over Z2 interface based on the received flow profile and the routing policies received from the SNC over Z1 interface.

The Data Gateway (DGW) may interface with a SNC over interface Z5 to update network load status and enforce routing policies received from the SNC and/or interface with one or more RAN nodes over Z2 interface to forward received user-plane traffic based on the configured routing policies.

The service request procedure is initiated by the SCS/AS towards the SPF to request service for a particular service identified by a service ID. The SPF function performs subscription request procedure to check if the application server is authorized for the subscribed service. When successful, the SPF sends service request message to at least one of the SNC(s) which are capable of provisioning requested service. Either the SPF or the SNC performs authentication procedure with the Subscription Repository to obtain the security parameters for the service group. When receiving service request message from the SPF and obtaining security parameters, the SNC creates a security context for the requested service group.

According to the real-time network load situations, the SNC initiates network configuration procedure for the requested service by configuring the routing policies on at least one of the DGWs to provision packets transmission. Further, the SNC provides routing policies, and traffic information, to the RAN node for handling the packets forwarding in the user plane via one or more DGWs.

Based on the security parameters sent from the subscription repository, the SNC initiates security mode control procedure towards the RAN node, wherein the security parameters may be sent from the SNC to the RAN node by a security control request message or along with the message for updating routing policies. The RAN node broadcasts the service information in a System Information Block (SIB) or a similar broadcast message with encrypted content for authentication as well as for traffic information.

After decrypting the received SIB information for the intended group service, and successfully authenticate the network that provisions the group service, the IoT devices can perform fast packets transmission. The RAN node forwards the IP/Non-IP packets according to the stored routing policies only when the authentication of the IoT service group and the IoT device are successful.

The SCS/AS may initiate the Service Request Procedure. Either the SPF or the SNC performs authentication and/or authorization procedure with the Subscription Repository. Only when SCS/AS is authenticated and/or authorization, the SNC creates security context.

In an example, the SPF performs authentication of the application server.

The SCS/AS sends a message indicating its server ID as well as the requested service ID to a SPF for requesting a service. A service ID may be associated to different parameters, e.g. geometric area, QoS, etc., depending on the agreements between the service operators and the network operators. The service ID may represent as a group service for a group of IoT devices; alternatively, one or more group IDs may further be provided for identification, in which each group may have different service expectation in terms of QoS, geometric area, security, etc. For better illustration, a service ID may be used to represent a specific service and group ID to represent the service group which is with different service parameters.

In an example, the SPF performs authorization and authentication procedure towards the subscription repository for authorizing the application server identified by the server ID with the requested service identified by the service ID and for authenticating the application server, respectively. If both are successful, in the response message, the SPF can receive security vector (SV) of the service per group. If either authorization or authentication is failed, the SPF replies a rejection message with a proper cause in response to the service request message. For example, the SV of a service group may include a security key, e.g. G-KASAS, G-AUTN, G-RAND, G-XRES, from the Subscription repository, wherein the KASAS key is the authentication key of the application server.

The SPF sends a service request to the SNC with the service group information after obtaining security vector(s) for the service group(s).

The SNC creates security context per service group, wherein the group security context includes received security vector (SV).

The SNC may respond to the SCS/AS via SPF to confirm the creation of the security context for the service group.

In an example, the SNC performs authentication of the application server.

The SPF performs authorization procedure towards the subscription repository to check service subscription for authorizing the application server identified by the server ID with the requested service identified by the service ID.

The SPF sends a service request to the SNC with the service group information.

The SNC sends a message to subscription repository for authenticating the application server. If the application server authentication is successful, in the response message, the SNC can receive security vector (SV) of the service per group if the group ID is provided. If either service authorization or server authentication is failed, the SPF replies a rejection message with a proper cause in response to the service request message. For example, the SV of a group may include a security key, e.g. G-KASAS, G-AUTN, G-RAND, G-XRES, from the subscription repository, wherein the KASAS key is the authentication key of the application server.

The SNC creates security context per service group, wherein the group security context includes received security vector (SV).

The SNC may respond to the SCS/AS via SPF to confirm the creation of the security context for the service group.

When receiving a service request message for requesting a service from an Application Server, the SNC determines to provision the service via a non-IP or IP packets transmission for the IoT device via one of the PDN network and configures routing policies on one or more DGWs corresponding to a traffic ID. The traffic ID is used for identifying a packet to be forwarded in the DGW. That is, the DGW identifies a packet based on its traffic ID and forwards the packet based on the configured routing policy corresponding to the traffic ID.

The SNC is responsible for allocating a traffic ID which is to be used by the RAN node and DGW to forward the traffic packets based on the routing policies. The traffic ID may be associated to a pre-configured ID in the IoT device, otherwise it may be known by the IoT device via the serving RAN node.

For IP packet transmission, the traffic ID can be associated to an IPv6 prefix. The SNC or the RAN node is responsible for allocating an IPv6 prefix to the IoT device via the serving RAN node. For Non-IP packet transmission, the SNC configures a traffic ID which may be mapped to a service ID or a group ID of a service identified by a service ID.

The SNC quarries real-time network load information from one or more DGWs.

The SNC configures the DGW with routing policies that is corresponding to a traffic ID.

The SNC provides the routing information, traffic information, along with security parameters for the services to the RAN node, wherein the traffic information may be IPv6 prefix, traffic ID. The security parameters are detailed in the security mode control procedure.

The RAN node stores the routing polices, traffic ID, and security parameters in a group context. The security parameters will be detailed in the security mode control procedure.

The SNC receives a security vector per group from the SPF as in or Subscription Repository as described above, which is generated by the subscription repository. For example, the security vector may include the following security parameters:
- a group authentication token (G_AUTN),
- a group random number (G_RAN) for a particular group.
- a group authentication result (G_XRES)
- a security key of the application server (KASAS)

The SNC creates service security context for the application server with the requested service per group if indicated, and then initiated Security Mode Control procedure.

The SNC further generates a security key for the RAN node, KRAN.

The SNC provides the KRAN, and a validity timer to the RAN node. Additionally, the G_AUTN, G_RAND, G_XRES may be provided to the security mechanism.

The RAN node generates a shared security key, KSIB, for broadcasting the group information at a broadcast message, e.g. System Information Block (SIB). The KSIB is used for encrypting one or more information in a SIB, e.g. authentication information and group information, wherein the SIB may include at least one of the following security parameters:
- Group ID
- A decryption random number for the IoT device to generate a decrypted key based on its stored shared group key, i.e. Kg, where the generated decrypted key is the same asKSIB.
- A decryption Algorithm index used for SIB decryption on ciphered content.
- Encrypted authentication information, e.g. G_XRES, G_AUTN and G_RAND used for both of device authentication as well as the group authentication.
- Encrypted group information, e.g. IPv6 prefix, for IP packet transmission or Traffic ID used for non-IP packet transmission.

Further, the RAN node stores the security parameters to authenticate the IoT device of a particular service within the valid duration. For example, the security parameters for the authentication may be G_XRES, G_AUTN, and G_RAND.

The RAN node broadcast the SIB, and the IoT device receives and identity the SIB indicated for a particular group ID.

The IoT device receives an encrypted System Information Block (SIB) of the group identified by the Group ID from the network and performs the security mode control procedure.

After decrypting the encrypted information contained in the SIB and authenticating the network successfully, the IoT device obtains the traffic information that is to be used for packet transmission to the application server. For IP packet transmission, it auto-configures its IPv6 address by using received IPv6 prefix. For non-IP packet transmission, it marks the packet with traffic ID.

The IoT device sends a Layer 2/Layer 3 message, e.g. RRC message or NAS message, with piggy packing the non-IP or IP packets as well as the security parameters for security authentication.

The RAN node authenticates the IoT group based on the received security parameter, G_XRES. Additionally, the network may authenticate the IoT device based on the security parameter, I_XRES via the RAN node or the SNC. In an example, I_XRES can be calculated by using the G_RAND. In another example, I_XRES can be calculated by using an I_RAND which is generated by using G_RAND as a seed number. In this way, each individual IoT device may have different I_RAND for calculating its I_XRES. In the former case, the SNC may have sent the IoT device information to the RAN node. Otherwise, the RAN node may send a security control message to the SNC for obtaining the result of the authentication for the IoT device.

The RAN node starts to forward the IP packets to the corresponding DGW. Otherwise, it drops the packets and rejects the requests indicating with appropriate cause.

Further, after receiving the SIB identified by an intended Group ID, the IoT device performs the following security procedure, including security ciphering, security authentication.

The IoT device identifies the SIB for its interested Group ID.

The IoT device generates a decrypted key based on a shared group key, i.e. Kg, stored in a secured memory entity in the IoT device, the received decryption random number, and the decryption algorithm index, to generate a decrypted key for decrypting the SIB, wherein the generated decrypted key is the same as KSIB.

The IoT device decrypts the encrypted information in the SIB information to obtain the security parameters, e.g. G_XRES, G_AUTN and G_RAND.

The IoT device continues with at least one level of the security procedure, i.e. group and/or device authentication. The same G_RAND is used to calculate G_RES by using its shared group key and I RES by using the IoT device's security key.

The IoT device authenticates the network by examining the result of the G_AUTN with its generated AUTN based on the SQN and stored group key.

The IoT device considers the network is authenticated if its generated G_AUTN matched with the received G_AUTN. Only when network authentication is successful, the IoT device then continues with requesting authenticating itself by returning generated G_XRES and I_XRES to the RAN node by using the same G_RAND. Alternatively, the I_XRES can be calculated by using an I_RAND which is generated by using G_RAND as a seed number. In this way, each individual IoT device may have different I_RAND for calculating its I_XRES.

In various examples, a network slicing mechanism may be used. Each slice may have different policies for devices that request different services. In an example, a network slicing operation includes a core network (CN) slice and radio access network (RAN) slice in an evolved packet core (EPC) based infrastructure with separated control plane and user plane entities. A data gateway may provide connectionless transmission feature at user plane function in the core network. Each network slice may be configured with different policies for the device requesting different services, e.g. Internet service, IoT services, etc. Using network slices may also help provision a large number of devices without incurring the signaling and resource overhead that is found in current systems.

Network slicing may be enforced in both the Core Network and the RAN with a CN slice and a RAN slice. The core network slice may be allocated based on the subscribed services of the device, the device capabilities, etc. Each network slice may be configured with various policies. These policies may include IP address allocation policies (a particular IPv4 address pool or IPv6 prefix); session management policies; security control policies; user plane traffic handling policies at RAN node; and connection management policies.

In an example, network slicing may be done in the RAN and core network with control plane and user plane separation. The core network slice and RAN slice may be associated via allocated IP address policies, e.g. an allocated IPv6 prefix or an IPv4 addresses pool, which may provide a unified mechanism at core network and the RAN, and still leave flexibility on each slice to configure independent policies on the core network and the RAN. The RAN node in the RAN slice, and one or more data gateways (DGWs) in Core Network User Plane Function (CP-UPF) in CN slice need not maintain individual device context for storing routing policy of the infrequent IP service session as well as the associated expiration timer. Rather, this may be done for the entire group of IP addresses. This may be beneficial when receiving mobile terminated Acknowledgement message from the application server for the delivered IP packets. The RAN node in RAN slice may store the shared security parameters and routing policies for the IoT devices allocated with the same IPv6 prefix or the IPv4 address within the pool of the IPv4 addresses. Such operation may reduce the storage space of the security parameters for each individual IoT device and reduce signaling overheads for retrieving the security parameters for each individual IoT device. A shared security parameters and security control operation can significantly reduce signaling overheads induced by massive numbers of IoT devices. The IoT device needs not mark the IP packets for packet forwarding at the RAN node and one or more DGWs, which may avoid and/or decrease packets transmission complexity and potential power consumption at the IoT device.

A system architecture that supports network slicing may include an access and mobility management function (AMF), a Core Network User Plane Function (CN-CPF) and a Core Network User Plane Function (CN-UPF). The AMF may be a mobility management entity. The CN-CPF and the CN-UPF may be separated. The CN-UPF may include serving/packet gateway (S/PGW) and one or more Data Gateway (DGW). The CN-UPF and the CN-CPF may be connected via various interfaces.

The DGW in CN-UPF may include an IP router capable of receiving IP packets from an input port and forwarding the IP packets to an output port based on routing policies configured by CN-CPF. In an example, the routing policies may be configured using an openflow protocol. Further, the CN-CPF interfaces S/PGW in CN-UPF over an interface, which may be standardized (e.g., by 3GPP in Rel-14).

The RAN node may transmit user plane data packets to S/PGW over an interface via GPRS Tunneling Protocol (GTP)-U tunnel. The RAN node may also transmit IP packets to the DGW over an interface via an IP connection between the RAN node and the DGW.

In an example, network slicing may be enforced in both the Core Network and the RAN node. The network slice may be based on the subscribed services of the devices, including Internet service of the regular user equipment, IoT service of the regular UEs, and a particular IoT service of the IoT devices, e.g. water/gas/electricity meters, health care meters, etc. For example, a first network slice may be for accommodating a large number of IoT devices with connectionless transmission features and a second network slice may be for accommodating each regular UE with an individual packet data network (PDN) connection. In an example, a regular UE may request an Internet service. The network may allocate a network slice for the requested Internet service with user plane traffic via a GTP tunnel between the RAN node and the S/PGW. The regular UE may request an IoT service. The network may allocate a network slice for the requested IoT service with user plane traffic via IP connection between the RAN node and the DGW.

Aspects of the network slicing in both the core network and the RAN include various features. The subscription repository, e.g., home subscriber server (HSS), may store service subscription which may provide information for the mobility management entity (MME)/CN-CPF to classify the service requirements of a device. The information may be a subscribed service of the device, service characteristics, service provider information, application server address, QoS criteria (maximum/minimum/average packets transmission rate, latency requirements, delay jitter), device type (e.g. regular UE or IoT device), device capability, etc. Accordingly, the MME/CN-CPF may allocate a network slice to a service request of a device.

Each network slice may be configured with an IP address allocation policies (e.g., a particular IPv4 address pool or IPv6 prefix), session management policies, security control policies, user plane traffic handling policies at RAN node, and/or connection management policies. For example, the Network Slice 1 may be with IP address pool#1 and regular PDN sessions and Network slice 2 may be with IP address pool#2 and a connectionless transmission session.

The network including core network and the RAN can handle the control plane signaling, user plane data traffic transparently by authenticating the device via device ID information or piggybacked dummy IP packet with allocated IP address in the control plane signaling, e.g. RRC message. Alternatively, the allocated network slice information, e.g. network slice ID, may be provided to the device for authenticating the device via shared security parameters. The MME/CP-CNF/RAN node may store and enforce the Network slice policies accordingly.

As described above, the network may allocate IPv4 address and/or IPv6 prefix according to the IP address allocation policies and UE capabilities. In an example, for a regular UE being allocated with network slice#1, the network may allocate an IPv4 address within the IP address pool#1 to the regular UE. For an IoT device being allocated with network slice#2, the network may allocate an IPv4 address within the IP address pool#2 to the IoT device.

The network may create sessions according to the session management policies of the network slice. For example, for a regular UE being allocated with network slice#1, the CN-CPF may select a first CN-UPF which may function as S/PGW and can handle the regular session management procedure (e.g., as indicated in [23.401/24.301]). In an example, for an IoT deice being allocated with network slice#2,the CN-CPF may select a CN-UPF which may function as one or more Data Gateways with IP packets receiving and forwarding capabilities. The CN-CPF may send messages, e.g. using the openflow protocol, to configure the routing polies on one or more DGWs in the CN-UPF. The routing policies may be based on the allocated IPv4 addresses pool and/or IPv6 prefix. That is, when one or more IoT devices sends IP packets with different source IPv4 addresses within the IPv4 addresses pool or the IPv6 prefix, the same routing policy may be applied.

In an example, a CN-UPF may contain two different network slices, network slice#1 may contain functions of S/PGW and network slice#2 may contain functions of Data Gateway with IP packets receiving and forwarding capability. In this example, the CN-CPF can send messages to the CN-UPF. The message may include an indication for network slice#2and the routing policies for one or more DGWs for network slice#2.

The network may maintain security parameters and perform security control according to security policies of the network slice. For example, for a regular UE being allocated with network slice#1, the network may generate security parameters and perform security control, for example as may be described in 23.401/24.301. In an example, for an IoT device being allocated with network slice#2, the HSS/MME/CN-CPF/eNB may generate security parameters that may depend on respective functions. For authentication, the RAN node may use the same security parameters of authentication for the IoT devices as a group for the network slice#2. That is, the IoT devices may share the same security parameters for authentication as a group when entering connected mode from idle mode. The HSS may create authentication parameters, e.g. KASME, and may provide them to MME. The authentication parameters may be for device and/or group. The group authentication parameters may be generated, e.g. based on the KASME, and sent from the MME. The group authentication parameters may be stored at eNB and may be updated by security control mechanism within an update duration or when an update timer is expired. Alternatively, the MME may create eNB security parameters for RAN level security, e.g. KENB. The parameters may be sent and stored at the eNB and may be updated by security control mechanism within an update duration or when an update timer is expired. Accordingly, the group authentication parameters may be generated and stored by the eNB, e.g. based on the RAN level security, e.g. KENB.

For user plane encryption/decryption/integrity, the RAN node may use the same security parameters of encryption/decryption for the network slice#2. The IoT devices may share the same security parameters of encryption/ decryption.

The CN-CPF may create security context for storing user plane data security parameters including encryption/decryption/integrity. The parameters may be generated by CN-CPF itself or based on a security parameter provided by the MME. Alternatively, the security parameters may be generated by the MME and send to the CN-CPF. Also, the parameters may be sent to the eNB via the MME and stored at the eNB. If the parameters can be used for a routing policy to be shared by IoT devices, the parameters may be updated by security control mechanism within an update duration or when an update timer is expired. Alternatively, the eNB may create security context for storing user plane data security parameters including encryption/decryption/integrity. The parameters may be generated by the eNB itself or based on a security parameter provided by the MME, e.g. KENB. The parameters may be stored at the eNB, and sent to the CN-CPF via the MME. If the parameters can be used for a routing policy to be shared by IoT devices, the parameters may be updated within an update timer by security control mechanism. The CN-CPF may provide the security parameters to an encryption/decryption function in the CN- UPF. The encryption/decryption function may be a standalone security Gateway or collocated at a boundary DGW.

Different security parameters may have different update policies. The update policy may be a validity/update timer, a valid number of IoT devices, a valid number of IP packets, etc. When the criteria of the update policy are met, the security update procedure may be initiated. In an example, the MME/CN-CPF or the eNB which generates shared security parameters may start one or more validity timers for the corresponding shared security parameters. When a validity timer is expired, the MME/CN-CPF or the eNB may generate a new shared security parameters and trigger security update procedure. In another example, the eNB may receive shared security parameters along with the corresponding validity timers (e.g., the timer value may be same or different depending on security level) from the MME/CN-CPF. When a validity timer expires, the eNB may trigger security update procedure by sending a security update request message to the MME/CN-CPF. The message may indicate security parameter type.

The RAN node may handle user plane traffic according to security policies and routing polices of the allocated network slice. In an example, for a regular UE being allocated with network slice#1, the network may handle user plane traffic according to policies associated to the network slice#1. The RAN node may encapsulate the received data packets into one or more GTP-U packets and transmit the IP packets via a GTP-U tunnel between the RAN node and the S/PGW. In an example, for an IoT device being allocated with an IPv4 address within a IPv4 address pool or with an IPv6 prefix according to network slice#2, the RAN node may forward the received IP packets towards the DGW based on the stored routing polices received from the MME in the core network. The routing polices may be configured by the CN-CPF. When one or more IoT devices sends IP packets with different source IPv4 addresses within the IPv4 addresses pool or the IPv6 prefix, the same routing policy may be applied. For example, the connectionless transmission feature may be accomplished by sharing the same routing policies among IoT devices. The network stores and maintains the group context without storing and maintaining individual IoT devices context.

The RAN node or MME may handle the connectivity of the IoT devices according to the allocated network slice. In an example, for a regular UE being allocated with network slice# 1, the network may perform connection management for the UE. In an example, for an IoT device being allocated with network slice#2, the network may perform various features to reduce power consumption of the IoT device. In an example, the MME may detach the IoT device when a preconfigured connection timer is expired. In another example, the eNB may disconnect the RRC connection when a preconfigured connection timer is expired. The IoT device may enter a power saving mode or idle mode. When the IoT device enters RRC connected mode and sends a service request message, the eNB stored with shared security parameters for user plane data encryption/decryption and a valid routing policy may not forward service request message towards MME for device authentication and setting up initial device context. Instead, the eNB may use shared security parameters for group authentication and for handling user plane traffic. When the group authentication is passed, the eNB may encrypt and forwards the received user plane packets towards the DGW according to the stored routing policies for the group.

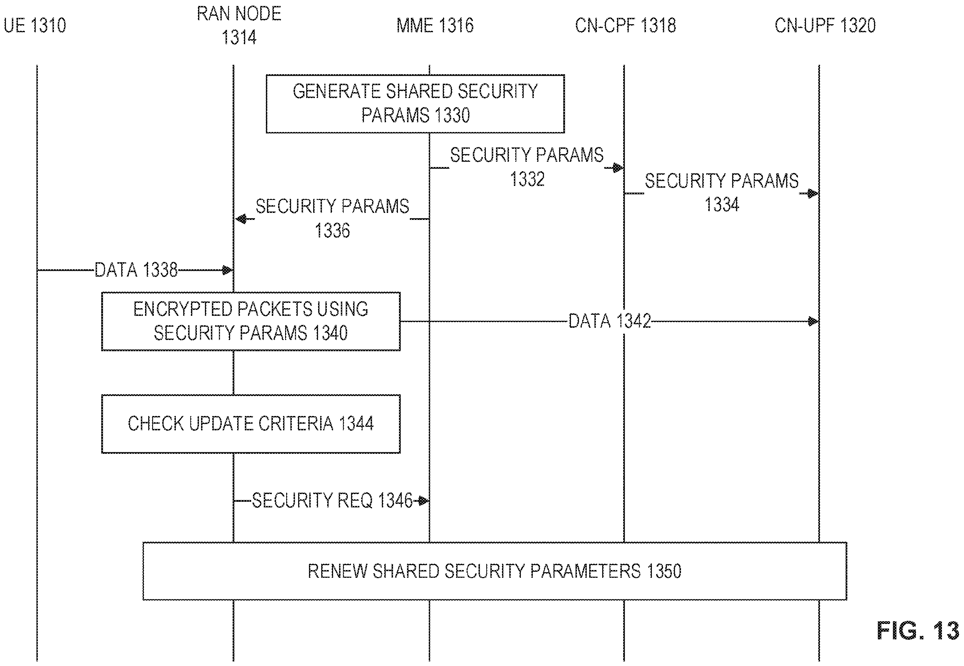

FIG. 13 is a message flow diagram for user plane traffic handling in a network slice according to some embodiments described herein. At 1330, a MME 1316 may generate shared security parameters. The shared security parameters may be used for encryption, decryption, and data integrity. At 1332, the security parameters may be sent to a CN-CPF 1318. At 1334, the CN-CPF 1318 may send the security parameters to a CN-UPF 1320. At 1336, the MME 1316 may also send the security parameters to a RAN node 1314. At 1338, after a UE 1310 is provisioned as described above, the UE 1310 may send data to the RAN node 1314. At 1340, the RAN node 1314 may encrypt the data packets using the stored security parameters. At 1342, the RAN node 1314 may then send the data packets to the CN-UPF 1320. As described above, the security parameters may be valid for a period of time or based upon a number of connected devices. At 1344, the validity of the security parameters is checked. For example, the number of data packets from the UE 1310 and other UEs that use the security parameters may have reached a threshold. At 1346, when an update to the security parameters is needed a security parameters request is sent to the MME 1316. The security parameters request may include the parameter type that needs to be updated. At 1350, the security parameters renewed. The security parameters may be renewed by the MME generating new shared security parameters and providing the new parameters to the CN-CPF 1318, the CN-UPF 1320, and the RAN node 1314.

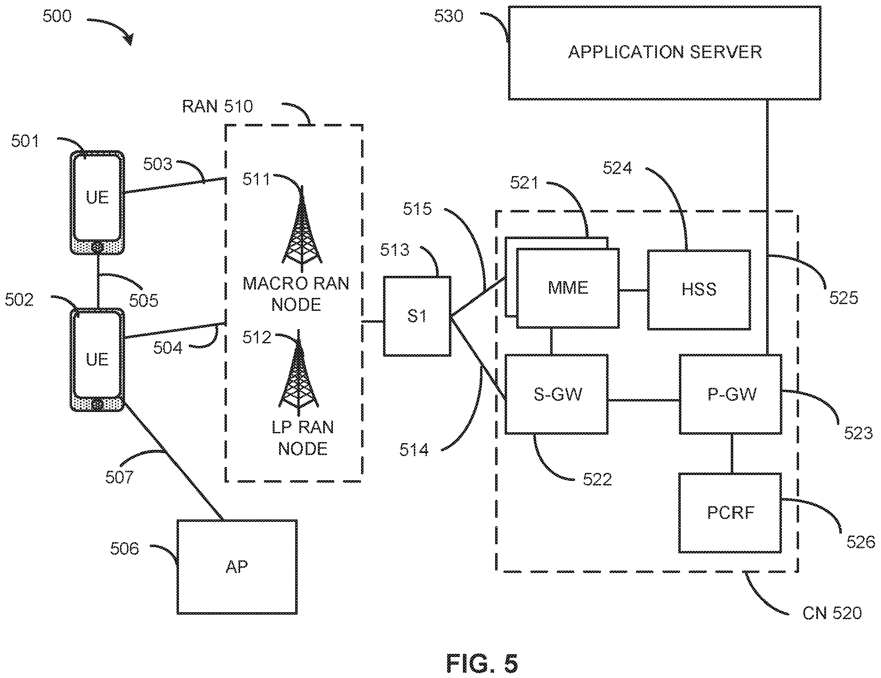

FIG. 5 illustrates an architecture of a system 500 of a network in accordance with some embodiments. The system 500 is shown to include a user equipment (UE) 501 and a UE 502. The UEs 501 and 502 are illustrated as smartphones (e.g., handheld touchscreen mobile computing devices connectable to one or more cellular networks), but may also comprise any mobile or non- mobile computing device, such as Personal Data Assistants (PDAs), pagers, laptop computers, desktop computers, wireless handsets, or any computing device including a wireless communications interface.

In some embodiments, any of the UEs 501 and 502 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device(D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 501 and 502 may be configured to connect, e.g., communicatively couple, with a radio access network (RAN) 510 - the RAN 510 may be, for example, an Evolved Universal Mobile Telecommunications System (UMTS) Terrestrial Radio Access Network (E-UTRAN), aNextGen RAN (NGRAN), or some other type of RAN. The UEs 501 and 502 utilize connections 503 and 504, respectively, each of which comprises a physical communications interface or layer (discussed in further detail below); in this example, the connections 503 and 504 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 501 and 502 may further directly exchange communication data via a ProSe interface 505. The ProSe interface 505 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 502 is shown to be configured to access an access point (AP) 506 via connection 507. The connection 507 can comprise a local wireless connection, such as a connection consistent with any IEEE 802.11 protocol, wherein the AP 506 would comprise a wireless fidelity (WiFi^{®}) router. In this example, the AP 506 is shown to be connected to the Internet without connecting to the core network of the wireless system (described in further detail below).

The RAN 510 can include one or more access nodes that enable the connections 503 and 504. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 510 may include one or more RAN nodes for providing macrocells, e.g., macro RAN node 511, and one or more RAN nodes for providing femtocells or picocells (e.g., cells having smaller coverage areas, smaller user capacity, or higher bandwidth compared to macrocells), e.g., low power (LP) RAN node 512.

Any of the RAN nodes 511 and 512 can terminate the air interface protocol and can be the first point of contact for the UEs 501 and 502. In some embodiments, any of the RAN nodes 511 and 512 can fulfill various logical functions for the RAN 510 including, but not limited to, radio network controller (RNC) functions such as radio bearer management, uplink and downlink dynamic radio resource management and data packet scheduling, and mobility management.

In accordance with some embodiments, the UEs 501 and 502 can be configured to communicate using Orthogonal Frequency-Division Multiplexing (OFDM) communication signals with each other or with any of the RAN nodes 511 and 512 over a multi carrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 511 and 512 to the UEs 501 and 502, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 501 and 502. The physical downlink control channel (PDCCH) may carry information about the transport format and resource allocations related to the PDSCH channel, among other things. It may also inform the UEs 501 and 502 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 511 and 512 based on channel quality information fed back from any of the UEs 501 and 502. The downlink resource assignment information may be sent on the PDCCH used for (e.g., assigned to) each of the UEs 501 and 502.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 510 is shown to be communicatively coupled to a core network (CN) 520 -via an S1 interface 513. In embodiments, the CN 520 may be an evolved packet core (EPC) network, a NextGen Packet Core (NPC) network, or some other type of CN. In this embodiment the S1 interface 513 is split into two parts: the S1-U interface 514, which carries traffic data between the RAN nodes 511 and 512 and the serving gateway (S-GW) 522, and the S1- mobility management entity (MME) interface 515, which is a signaling interface between the RAN nodes 511 and 512 and MMEs 521.

In this embodiment, the CN 520 comprises the MMEs 521, the S-GW 522, the Packet Data Network (PDN) Gateway (P-GW) 523, and a home subscriber server (HSS) 524. The MMEs 521 may be similar in function to the control plane of legacy Serving General Packet Radio Service (GPRS) Support Nodes (SGSN). The MMEs 521 may manage mobility aspects in access such as gateway selection and tracking area list management. The HSS 524 may comprise a database for network users, including subscription-related information to support the network entities' handling of communication sessions. The CN 520 may comprise one or several HSSs 524, depending on the number of mobile subscribers, on the capacity of the equipment, on the organization of the network, etc. For example, the HSS 524 can provide support for routing/roaming, authentication, authorization, naming/addressing resolution, location dependencies, etc.

The S-GW 522 may terminate the S1 interface 513 towards the RAN 510, and routes data packets between the RAN 510 and the CN 520. In addition, the S-GW 522 may be a local mobility anchor point for inter-RAN node handovers and also may provide an anchor for inter-3GPP mobility. Other responsibilities may include lawful intercept, charging, and some policy enforcement.

The P-GW 523 may terminate an SGi interface toward a PDN. The P-GW 523 may route data packets between the EPC network 523 and external networks such as a network including the application server 530 (alternatively referred to as application function (AF)) via an Internet Protocol (IP) interface 525. Generally, the application server 530 may be an element offering applications that use IP bearer resources with the core network (e.g., UMTS Packet Services (PS) domain, LTE PS data services, etc.). In this embodiment, the P-GW 523 is shown to be communicatively coupled to an application server 530 via an IP communications interface 525. The application server 530 can also be configured to support one or more communication services (e.g., Voice-over-Internet Protocol (VoIP) sessions, PTT sessions, group communication sessions, social networking services, etc.) for the UEs 501 and 502 via the CN 520.

The P-GW 523 may further be a node for policy enforcement and charging data collection. Policy and Charging Enforcement Function (PCRF) 526 is the policy and charging control element of the CN 520. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 526 may be communicatively coupled to the application server 530 via the P-GW 523. The application server 530 may signal the PCRF 526 to indicate a new service flow and select the appropriate Quality of Service (QoS) and charging parameters. The PCRF 526 may provision this rule into a Policy and Charging Enforcement Function (PCEF) (not shown) with the appropriate traffic flow template (TFT) and QoS class of identifier (QCI), which commences the QoS and charging as specified by the application server 530.

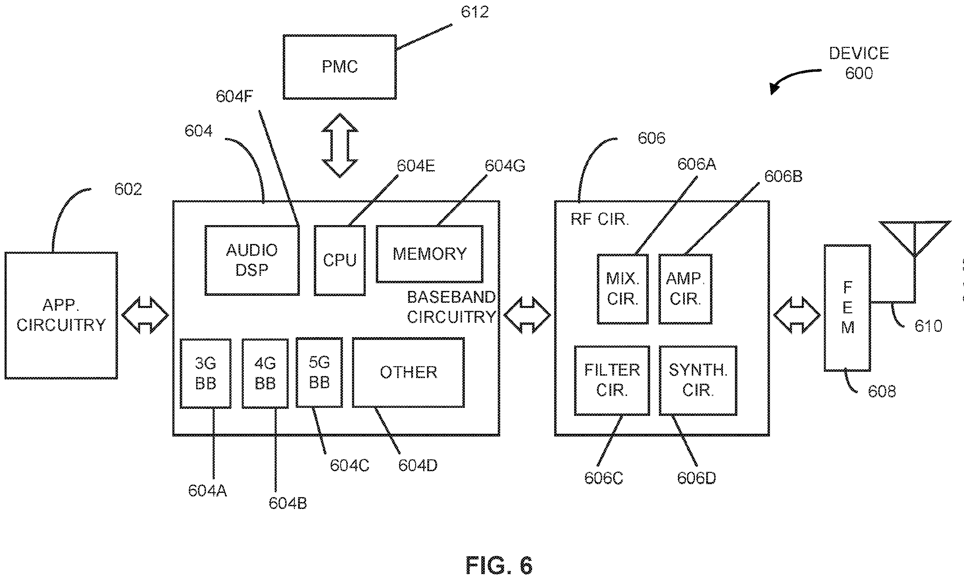

FIG. 6 illustrates example components of a device 600 in accordance with some embodiments. In some embodiments, the device 600 may include application circuitry 602, baseband circuitry 604, Radio Frequency (RE) circuitry 606, front-end module (FEM) circuitry 608, one or more antennas 610, and power management circuitry (PMC) 612 coupled together at least as shown. The components of the illustrated device 600 may be included in a UE or a RAN node. In some embodiments, the device 600 may include less elements (e.g., a RAN node may not utilize application circuitry 602, and instead include a processor/controller to process IP data received from an EPC). In some embodiments, the device 600 may include additional elements such as, for example, memory/storage, display, camera, sensor, or input/output (VO) interface. In other embodiments, the components described below may be included in more than one device (e.g., said circuitries may be separately included in more than one device for Cloud-RAN (C-RAN) implementations).

The application circuitry 602 may include one or more application processors. For example, the application circuitry 602 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 600. In some embodiments, processors of application circuitry 602 may process IP data packets received from an EPC.

The baseband circuitry 604 may include circuitry such as, but not limited to, one or more single-core or multi-core processors. The baseband circuitry 604 may include one or more baseband processors or control logic to process baseband signals received from a receive signal path of the RF circuitry 606 and to generate baseband signals for a transmit signal path of the RF circuitry 606. Baseband processing circuity 604 may interface with the application circuitry 602 for generation and processing of the baseband signals and for controlling operations of the RF circuitry 606. For example, in some embodiments, the baseband circuitry 604 may include a third generation (3G) baseband processor 604A, a fourth generation (4G) baseband processor 604B, a fifth generation (5G) baseband processor 604C, or other baseband processor(s) 604D for other existing generations, generations in development or to be developed in the future (e.g., second generation (2G), sixth generation (6G), etc.). The baseband circuitry 604 (e.g., one or more of baseband processors 604A-D) may handle various radio control functions that enable communication with one or more radio networks via the RF circuitry 606. In other embodiments, some or all of the functionality of baseband processors 604A-D may be included in modules stored in the memory 604G and executed via a Central Processing Unit (CPU) 604E. The radio control functions may include, but are not limited to, signal modulation/demodulation, encoding/decoding, radio frequency shifting, etc. In some embodiments, modulation/demodulation circuitry of the baseband circuitry 604 may include Fast-Fourier Transform (FFT), precoding, or constellation mapping/demapping functionality. In some embodiments, encoding/decoding circuitry of the baseband circuitry 604 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 604 may include one or more audio digital signal processor(s) (DSP) 604F. The audio DSP(s) 604F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 604 and the application circuitry 602 may be implemented together such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 604 is configured to support radio communications of more than one wireless protocol may be referred to as multi-mode baseband circuitry.

RF circuitry 606 may enable communication with wireless networks using modulated electromagnetic radiation through anon-solid medium. In various embodiments, the RF circuitry 606 may include switches, filters, amplifiers, etc. to facilitate the communication with the wireless network. RF circuitry 606 may include a receive signal path which may include circuitry to down-convert RF signals received from the FEM circuitry 608 and provide baseband signals to the baseband circuitry 604. RF circuitry 606 may also include a transmit signal path which may include circuitry to up-convert baseband signals provided by the baseband circuitry 604 and provide RF output signals to the FEM circuitry 608 for transmission.

In some embodiments, the receive signal path of the RF circuitry 606 may include mixer circuitry 606A, amplifier circuitry 606B and filter circuitry 606C. In some embodiments, the transmit signal path of the RF circuitry 606 may include filter circuitry 606C and mixer circuitry 606A. RF circuitry 606 may also include synthesizer circuitry 606D for synthesizing a frequency for use by the mixer circuitry 606A of the receive signal path and the transmit signal path. In some embodiments, the mixer circuitry 606A of the receive signal path may be configured to down-convert RF signals received from the FEM circuitry 608 based on the synthesized frequency provided by synthesizer circuitry 606D. The amplifier circuitry 606B may be configured to amplify the down-converted signals and the filter circuitry 606C may be a low-pass filter (LPF) or bandpass filter (BPF) configured to remove unwanted signals from the down-converted signals to generate output baseband signals. Output baseband signals may be provided to the baseband circuitry 604 for further processing. In some embodiments, the output baseband signals may be zero-frequency baseband signals, although this is not a requirement. In some embodiments, mixer circuitry 606A of the receive signal path may comprise passive mixers, although the scope of the embodiments is not limited in this respect.

In some embodiments, the mixer circuitry 606A of the transmit signal path may be configured to up-convert input baseband signals based on the synthesized frequency provided by the synthesizer circuitry 606D to generate RF output signals for the FEM circuitry 608. The baseband signals may be provided by the baseband circuitry 604 and may be filtered by filter circuitry 606C.

In some embodiments, the mixer circuitry 606A of the receive signal path and the mixer circuitry 606A of the transmit signal path may include two or more mixers and may be arranged for quadrature downconversion and upconversion, respectively. In some embodiments, the mixer circuitry 606A of the receive signal path and the mixer circuitry 606A of the transmit signal path may include two or more mixers and may be arranged for image rejection (e.g., Hartley image rejection). In some embodiments, the mixer circuitry 606A of the receive signal path and the mixer circuitry 606A may be arranged for direct downconversion and direct upconversion, respectively. In some embodiments, the mixer circuitry 606A of the receive signal path and the mixer circuitry 606A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 606 may include analog-to-digital converter (ADC) and digjtal-to-analog converter (DAC) circuitry and the baseband circuitry 604 may include a digital baseband interface to communicate with the RF circuitry 606.

In some dual-mode embodiments, a separate radio IC circuitry may be provided for processing signals for each spectrum, although the scope of the embodiments is not limited in this respect.

In some embodiments, the synthesizer circuitry 606D may be a fractional-N synthesizer or a fractional N/N+1 synthesizer, although the scope of 25 the embodiments is not limited in this respect as other types of frequency synthesizers may be suitable. For example, synthesizer circuitry 606D may be a delta-sigma synthesizer, a frequency multiplier, or a synthesizer comprising a phase-locked loop with a frequency divider.

The synthesizer circuitry 606D may be configured to synthesize an 30 output frequency for use by the mixer circuitry 606A of the RF circuitry 606 based on a frequency input and a divider control input. In some embodiments, the synthesizer circuitry 606D may be a fractional N/N+1 synthesizer.

In some embodiments, frequency input may be provided by a voltage controlled oscillator (VCO), although that is not a requirement. Divider control input may be provided by either the baseband circuitry 604 or the applications processor 602 depending on the desired output frequency. In some embodiments, a divider control input (e.g., N) may be determined from a look-up table based on a channel indicated by the applications processor 602.

Synthesizer circuitry 606D of the RF circuitry 606 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 606D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 606 may include an IQ/polar converter.

FEM circuitry 608 may include a receive signal path which may include circuitry configured to operate on RF signals received from one or more antennas 610, amplify the received signals and provide the amplified versions of the received signals to the RF circuitry 606 for further processing. FEM circuitry 608 may also include a transmit signal path which may include circuitry configured to amplify signals for transmission provided by the RF circuitry 606 for transmission by one or more of the one or more antennas 610. In various embodiments, the amplification through the transmit or receive signal paths may be done solely in the RF circuitry 606, solely in the FEM 608, or in both the RF circuitry 606 and the FEM 608.

In some embodiments, the FEM circuitry 608 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 606). The transmit signal path of the FEM circuitry 608 may include a power amplifier (PA) to amplify input RF signals (e.g., provided by RF circuitry 606), and one or more filters to generate RF signals for subsequent transmission (e.g., by one or more of the one or more antennas 610).

In some embodiments, the PMC 612 may manage power provided to the baseband circuitry 604. In particular, the PMC 612 may control power-source selection, voltage scaling, battery charging, or DC-to-DC conversion. The PMC 612 may often be included when the device 600 is capable of being powered by a battery, for example, when the device is included in a UE. The PMC 612 may increase the power conversion efficiency while providing desirable implementation size and heat dissipation characteristics.

While FIG. 6 shows the PMC 612 coupled only with the baseband circuitry 604. However, in other embodiments, the PMC 6 12 may be additionally or alternatively coupled with, and perform similar power management operations for, other components such as, but not limited to, application circuitry 602, RF circuitry 606, or FEM 608.

In some embodiments, the PMC 612 may control, or otherwise be part of, various power saving mechanisms of the device 600. For example, if the device 600 is in an RRC_Connected state, where it is still connected to the RAN node as it expects to receive traffic shortly, then it may enter a state known as Discontinuous Reception Mode (DRX) after a period of inactivity. During this state, the device 600 may power down for brief intervals of time and thus save power.

If there is no data traffic activity for an extended period of time, then the device 600 may transition off to an RRC _Idle state, where it disconnects from the network and does not perform operations such as channel quality feedback, handover, etc. The device 600 goes into a very low power state and it performs paging where again it periodically wakes up to listen to the network and then powers down again. The device 600 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 602 and processors of the baseband circuitry 604 may be used to execute elements of one or more instances of a protocol stack. For example, processors of the baseband circuitry 604, alone or in combination, may be used execute Layer 3, Layer 2, or Layer 1 functionality, while processors of the application circuitry 604 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

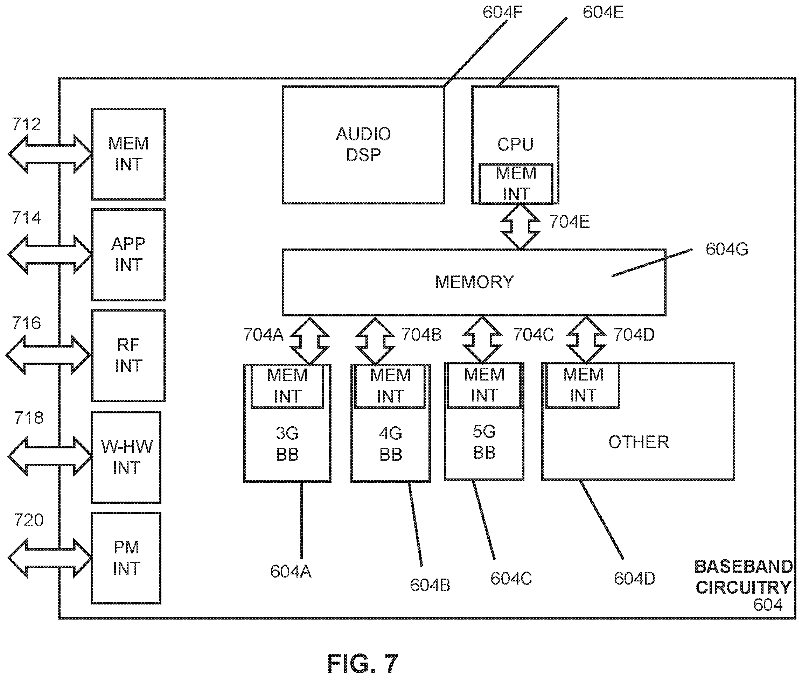

FIG. 7 illustrates example interfaces of baseband circuitry in accordance with some embodiments. As discussed above, the baseband circuitry 604 of FIG. 6 may comprise processors 604A-604E and a memory 604G utilized by said processors. Each of the processors 604A-604E may include a memory interface, 704A-704E, respectively, to send/receive data to/from the memory 604G.

The baseband circuitry 604 may further include one or more interfaces to communicatively couple to other circuitries/devices, such as a memory interface 712 (e.g., an interface to send/receive data to/from memory external to the baseband circuitry 604), an application circuitry interface 714 (e.g., an interface to send/receive data to/from the application circuitry 602 of FIG. 6), an RF circuitry interface 716 (e.g., an interface to send/receive data to/from RF circuitry 606 of FIG. 6), a wireless hardware connectivity interface 718 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 720 (e.g., an interface to send/receive power or control signals to/from the PMC 612).

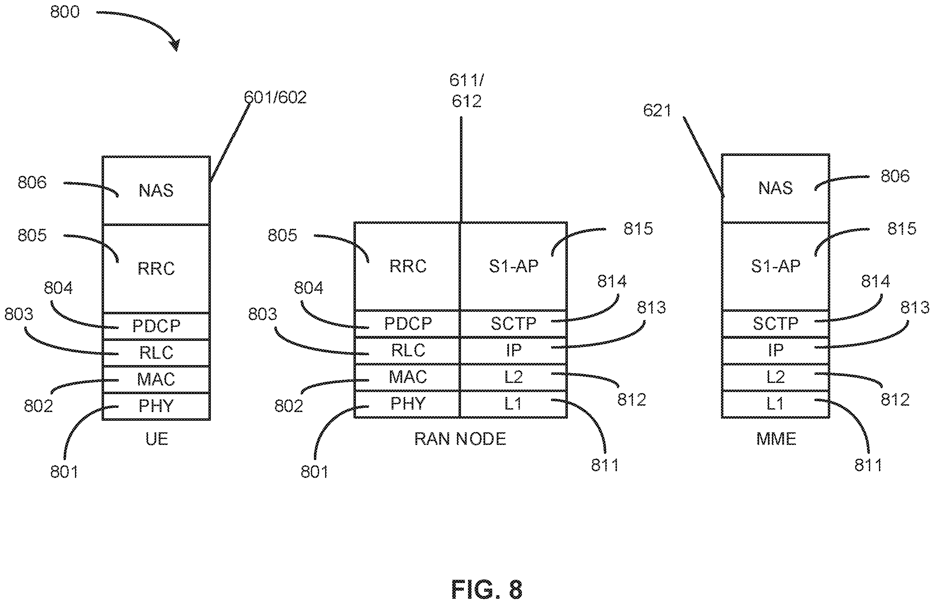

FIG. 8 is an illustration of a control plane protocol stack in accordance with some embodiments. In this embodiment, a control plane 800 is shown as a communications protocol stack between the UE 501 (or alternatively, the UE 502), the RAN node 511 (or alternatively, the RAN node 512), and the MME 521.

The PHY layer 801 may transmit or receive information used by the MAC layer 802 over one or more air interfaces. The PHY layer 801 may further perform link adaptation or adaptive modulation and coding (AMC), power control, cell search (e.g., for initial synchronization and handover purposes), and other measurements used by higher layers, such as the RRC layer 805. The PHY layer 801 may still further perform error detection on the transport channels, forward error correction (FEC) coding/decoding of the transport channels, modulation/demodulation of physical channels, interleaving, rate matching, mapping onto physical channels, and Multiple Input Multiple Output (MEMO) antenna processing.

The MAC layer 802 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 803 may operate in a plurality of modes of operation, including: Transparent Mode (TM), Unacknowledged Mode (UM), and Acknowledged Mode (AM). The RLC layer 803 may execute transfer of upper layer protocol data units (PDUs), error correction through automatic repeat request (ARQ) for AM data transfers, and concatenation, segmentation and reassembly of RLC SDUs for UM and AM data transfers. The RLC layer 803 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 804 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 805 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 501 and the RAN node 511 may utilize a Uu interface (e.g., an LTE-Uu interface) to exchange control plane data via a protocol stack comprising the PHY layer 801, the MAC layer 802, the RLC layer 803, the PDCP layer 804, and the RRC layer 805.

The non-access stratum (NAS) protocols 806 form the highest stratum of the control plane between the UE 501 and the MME 521. The NAS protocols 806 support the mobility of the UE 501 and the session management procedures to establish and maintain IP connectivity between the UE 501 and the P-GW 523.

The S1 Application Protocol (S1-AP) layer 815 may support the functions of the S1 interface and comprise Elementary Procedures (EPs). An EP is a unit of interaction between the RAN node 511 and the CN 520. The S1-AP layer services may comprise two groups: UE-associated services and non UE- associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 814 may ensure reliable delivery of signaling messages between the RAN node 511 and the MME 521 based, in part, on the IP protocol, supported by the IP layer 813. The L2 layer 812 and the L1 layer 811 may refer to communication links (e.g., wired or wireless) used by the RAN node and the MME to exchange information.

The RAN node 511 and the MME 521 may utilize an S1-MME interface to exchange control plane data via a protocol stack comprising the L1 layer 811, the L2 layer 812, the IP layer 813, the SCTP layer 814, and the S1-AP layer 815.

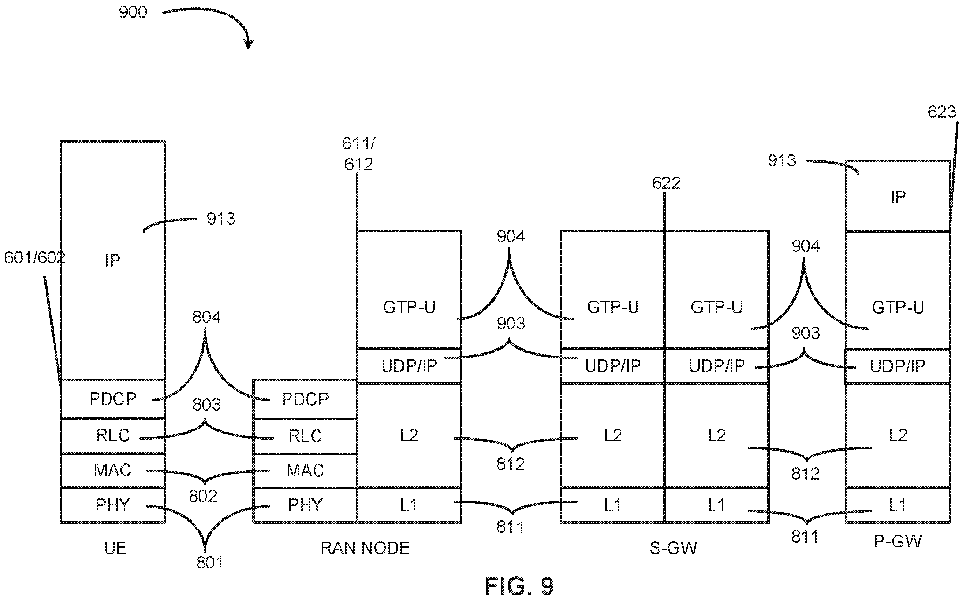

FIG. 9 is an illustration of a user plane protocol stack in accordance with some embodiments. In this embodiment, a user plane 900 is shown as a communications protocol stack between the UE 501 (or alternatively, the UE 502), the RAN node 511 (or alternatively, the RAN node 512), the S-GW 522, and the P-GW 523. The user plane 900 may utilize at least some of the same protocol layers as the control plane 800. For example, the UE 501 and the RAN node 511 may utilize a Uu interface (e.g., an LTE-Uu interface) to exchange user plane data via a protocol stack comprising the PHY layer 801, the MAC layer 802, the RLC layer 803, the PDCP layer 804.

The General Packet Radio Service (GPRS) Tunneling Protocol for the user plane (GTP-U) layer 904 may be used for carrying user data within the GPRS core network and between the radio access network and the core network. The user data transported can be packets in any of IPv4, IPv6, or PPP formats, for example. The UDP and IP security (UDP/IP) layer 903 may provide checksums for data integrity, port numbers for addressing different functions at the source and destination, and encryption and authentication on the selected data flows. The RAN node 511 and the S-GW 522 may utilize an S1-U interface to exchange user plane data via a protocol stack comprising the L1 layer 811, the L2 layer 812, the UDP/IP layer 903, and the GTP-U layer 904. The S-GW 522 and the P-GW 523 may utilize an S5/S8a interface to exchange user plane data via a protocol stack comprising the L1 layer 811, the L2 layer 812, the UDP/IP layer 903, and the GTP-U layer 904. As discussed above with respect to FIG. 8, NAS protocols support the mobility of the UE 501 and the session management procedures to establish and maintain IP connectivity between the UE 501 and the P-GW 523.

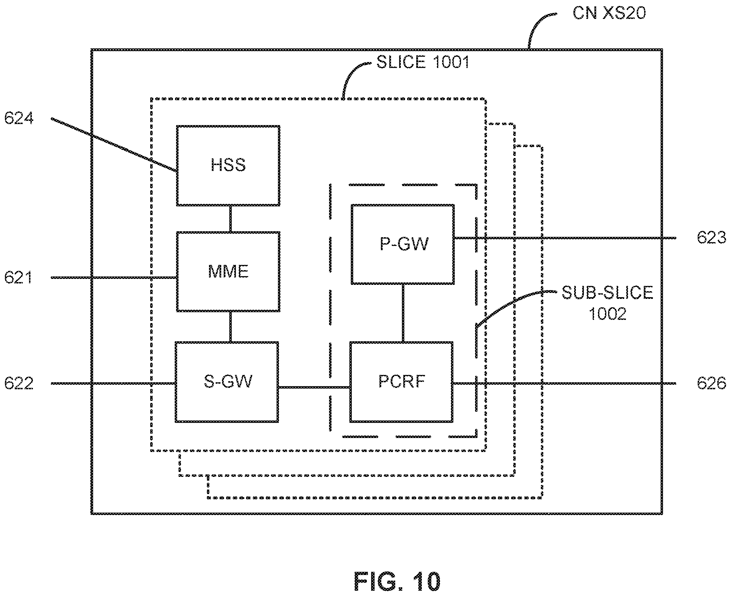

FIG. 10 illustrates components of a core network in accordance with some embodiments. The components of the CN 520 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 520 may be referred to as a network slice 1001. A logical instantiation of a portion of the CN 520 may be referred to as a network sub-slice 1002 (e.g., the network sub-slice 1002 is shown to include the PGW 523 and the PCRF 526).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

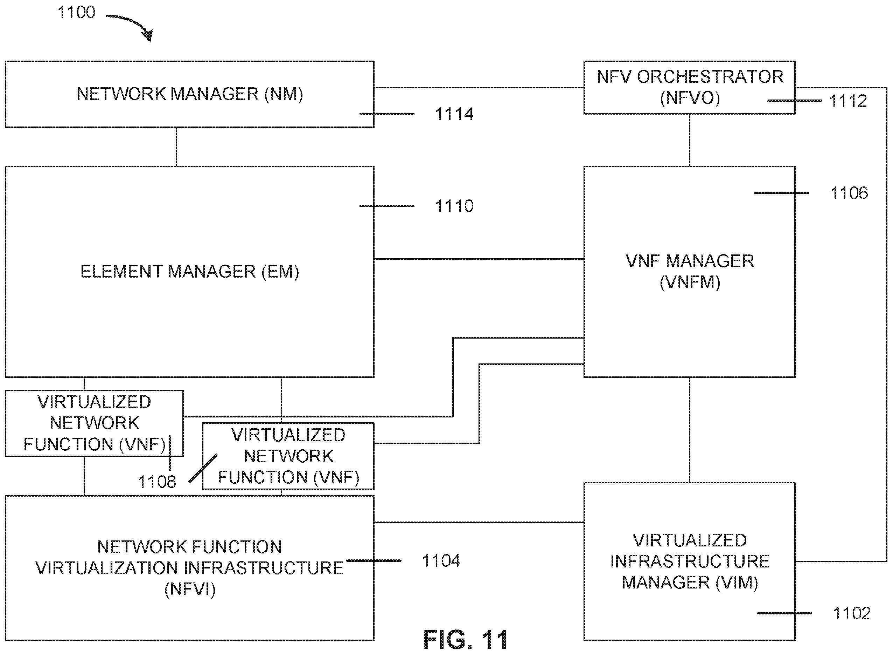

FIG. 11 is a block diagram illustrating components, according to some example embodiments, of a system 1100 to support NFV. The system 1100 is illustrated as including a virtualized infrastructure manager (VIM) 1102, a network function virtualization infrastructure (NFVI) 1104, a VNF manager (VNFM) 1106, virtualized network functions (VNFs) 1108, an element manager (EM) 1110, an NFV Orchestrator (NFVO) 1112, and a network manager (NM) 1114.

The VIM 1102 manages the resources of the NFVI 1104. The NFVI 1104 can include physical or virtual resources and applications (including hypervisors) used to execute the system 1100. The VIM 1102 may manage the life cycle of virtual resources with the NFVI 1104 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 1106 may manage the VNFs 1108. The VNFs 1108 may be used to execute EPC components/functions. The VNFM 1106 may manage the life cycle of the VNFs 1108 and track performance, fault and security of the virtual aspects of VNFs 1108. The EM 1110 may track the performance, fault and security of the functional aspects of VNFs 1108. The tracking data from the VNFM 1106 and the EM 1110 may comprise, for example, performance measurement (PM) data used by the VIM 1102 or the NFVI 1104. Both the VNFM 1106 and the EM 1110 can scale up/down the quantity of VNFs of the system 1100.

The NFVO 1112 may coordinate, authorize, release and engage resources of the NFVI 1104 in order to provide the requested service (e.g., to execute an EPC function, component, or slice). The NM 1114 may provide a package of end-user functions with the responsibility for the management of a network, which may include network elements with VNFs, non-virtualized network functions, or both (management of the VNFs may occur via the EM 1110).

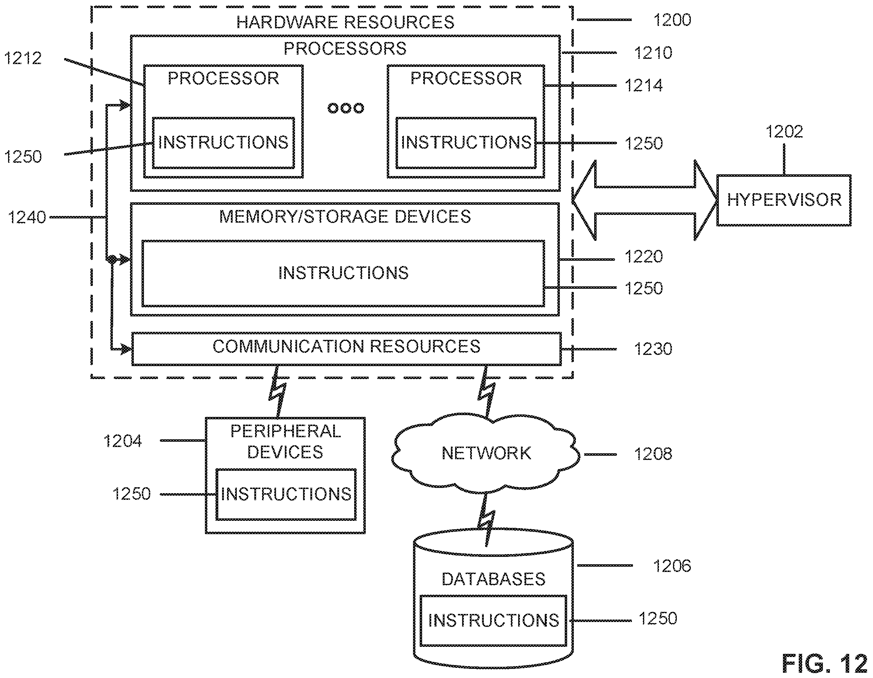

FIG. 12 is a block diagram illustrating components, according to some example embodiments, able to read instructions from a machine-readable or computer-readable medium (e.g., anon-transitory machine-readable storage medium) and perform any one or more of the methodologies discussed herein. Specifically, FIG. 12 shows a diagrammatic representation of hardware resources 1200 including one or more processors (or processor cores) 1210, one or more memory/storage devices 1220, and one or more communication resources 1230, each of which may be communicatively coupled via a bus 1240. For embodiments where node virtualization (e.g., NFV) is utilized, a hypervisor 1202 may be executed to provide an execution environment for one or more network slices/sub-slices to utilize the hardware resources 1200

The processors 1210 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1212 and a processor 1214.

The memory/storage devices 1220 may include main memory, disk storage, or any suitable combination thereof. The memory/storage devices 1220 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1230 may include interconnection or network interface components or other suitable devices to communicate with one or more peripheral devices 1204 or one or more databases 1206 via a network 1208. For example, the communication resources 1230 may include wired communication components (e.g., for coupling via a Universal Serial Bus (USB)), cellular communication components, NFC components, Bluetooth^{®} components (e.g., Bluetooth^{®} Low Energy), Wi-Fi^{®} components, and other communication components.

Instructions 1250 may comprise software, a program, an application, an applet, an app, or other executable code for causing at least any of the processors 1210 to perform any one or more of the methodologies discussed herein. The instructions 1250 may reside, completely or partially, within at least one of the processors 1210 (e.g., within the processor's cache memory), the memory/storage devices 1220, or any suitable combination thereof. Furthermore, any portion of the instructions 1250 may be transferred to the hardware resources 1200 from any combination of the peripheral devices 1204 or the databases 1206. Accordingly, the memory of processors 1210, the memory/storage devices 1220, the peripheral devices 1204, and the databases 1206 are examples of computer-readable and machine-readable media.

### Additional notes and examples:

Example 1 is an apparatus for a network controller (NC), the apparatus comprising: memory; and processing circuitry configured to: receive a first request from a first user equipment (UE), the request may be an attach or a service request comprising a first UE identifier and a requested internet protocol (IP) service with a packet data network (PDN) identified by an access point name (APN); allocate, based on the attach request, a group of IP addresses for the IP service, the group of IP addresses associated with a service identifier; configure a routing policy for the group of IP addresses; send the routing policy to a radio access network (RAN) node and a data gateway, the routing policy indicating a route for data packets, from UEs using the requested IP service, received at the RAN node to the data gateway; and store, in the memory, a mapping between the service identifier and the group of IP addresses.

In Example 2, the subject matter of Example 1 optionally includes wherein the processing circuitry is further configured to: send a second request to a subscription repository; and receive, in response to the first request, authentication parameters for the service identifier.

In Example 3, the subject matter of Example 2 optionally includes wherein the processing circuitry is further configured to: receive a third request from a second UE, the third request may be an attach or a service request comprising the requested IP service; determine the group of IP addresses associated with the requested IP service from the map; and authenticate the second UE based upon the previously received authentication parameters.

In Example 4, the subject matter of Example 3 optionally includes wherein the processing circuitry is further configured to: start a validity timer associated with the group of IP addresses upon receipt of the first request from the first UE; and verily the group of IP addresses are valid based upon the validity timer after receipt of the third request from the second UE.

In Example 5, the subject matter of any one or more of Examples 2-4 optionally include wherein the processing circuitry is further configured to send the authentication parameters to the RAN node, the authentication parameters stored and used to authenticate a second UE at the RAN node.

In Example 6, the subject matter of any one or more of Examples 1-5 optionally include prefix.

In Example 7, the subject matter of any one or more of Examples 1-69 optionally include addresses.

In Example 8, the subject matter of any one or more of Examples 1-7 optionally include wherein the processing circuitry is further configured to: estimate a number of UE for the service identifier; and determine a size of the group of IP addresses based upon the estimate number of UE.

In Example 9, the subject matter of any one or more of Examples 1-8 optionally include wherein the routing policy comprises a plurality of routing policies, wherein each policy has a weight used to distribute data packets associated with the IP service over a plurality of data gateways.

Example 10 is an apparatus for a radio access network (RAN) node, the apparatus comprising: memory; and processing circuitry configured to: receive a first request from a first user equipment (UE), the request may be an attach or service request comprising a first UE identifier and a requested internet protocol (IP) service with a packet data network (PDN) identified by an access point name (APN); allocate, based on the attach request, a group of IP addresses for the IP service, the group of IP addresses associated with a service identifier; send a second request message indicating the group of IP addresses for the IP service to a network controller; receive, based upon the second request message, a routing policy for the IP service from the network controller; allocate an IP address from the group of IP addresses to the first UE; route a data packet from the first UE based upon the routing policy; and store, in the memory, a map between the service identifier and the group of IP addresses.

In Example 11, the subject matter of Example 10 optionally includes wherein the processing circuitry is further configured to: receive, in response to the second request message, authentication parameters for the service identifier from the network controller.

In Example 12, the subject matter of Example 11 optionally includes wherein the processing circuitry is further configured to: receive a third request from a second UE, the third request may be an attach or service request comprising the requested IP service; determine the group of IP addresses associated with the requested IP service from the map; and authenticate the second UE based upon the previously received authentication parameters.

In Example 13, the subject matter of Example 12 optionally includes wherein the processing circuitry is further configured to: start a validity timer associated with the group of IP addresses upon receipt of the first request from the first UE; and verily the group of IP addresses are valid based upon the validity timer after receipt of the third request from the second UE.

In Example 14, the subject matter of Example 13 optionally includes wherein the processing circuitry is further configured to route a data packet from the second UE based upon the routing policy.

In Example 15, the subject matter of any one or more of Examples 10-14 optionally include prefix.

In Example 16, the subject matter of any one or more of Examples 10-15 optionally include addresses.

In Example 17, the subject matter of any one or more of Examples 10-16 optionally include wherein the processing circuitry is further configured to: estimate a number of UEs for the service identifier; and determine a size of the group of IP addresses based upon the estimated number of UEs.

In Example 18, the subject matter of any one or more of Examples 10-17 optionally include wherein the processing circuitry is further configured to request the network controller provide updates to the routing policy based upon changes to the routing policy.

In Example 19, the subject matter of any one or more of Examples 10-18 optionally include wherein the routing policy comprises a plurality of routing policies, wherein each policy has a weight used to distribute data packets associated with the IP service over a plurality of data gateways, and wherein the processing circuitry is further configured to route a packet received from the first UE based upon the weights.

Example 20 is an apparatus comprising means for performing any of the operations of Examples 1-19.

Example 21 is a non-transitory computer-readable medium comprising instructions to cause a radio access network (RAN) node, upon execution of the instructions by processing circuitry of the RAN node, to: receive a first request from a first user equipment (UE), the first request may be an attach or a service request comprising a first UE identifier and a requested internet protocol (IP) service with a packet data network (PDN) identified by an access point name (APN); allocate, based on the attach request, a group of IP addresses for the IP service, the group of IP addresses associated with a service identifier; send a second request message indicating the group of IP addresses for the IP service to a network controller; receive, based upon the second request message, a routing policy for the IP service from the network controller; allocate an IP address from the group of IP addresses to the first UE; route a data packet from the first UE based upon the routing policy; and store, in the memory, a map between the service identifier and the group of IP addresses.

In Example 22, the subject matter of Example 21 optionally includes wherein the processing circuitry is further configured to: receive, in response to the second request message, authentication parameters for the service identifier from the network controller.

In Example 23, the subject matter of Example 22 optionally includes wherein the processing circuitry is further configured to: receive a third request from a second UE, the third request may be an attach or a service request comprising the requested IP service; determine the group of IP addresses associated with the requested IP service from the map; and authenticate the second UE based upon the previously received authentication parameters.

In Example 24, the subject matter of Example 23 optionally includes wherein the processing circuitry is further configured to: start a validity timer associated with the group of IP addresses upon receipt of the attach request from the first UE; and verily the group of IP addresses are valid based upon the validity timer after receipt of the second attach request from the second UE.

In Example 25, the subject matter of Example 24 optionally includes wherein the processing circuitry is further configured to route a data packet from the second UE based upon the routing policy.

In Example 26, the subject matter of any one or more of Examples 21-25 optionally include prefix.

In Example 27, the subject matter of any one or more of Examples 21-26 optionally include addresses.

In Example 28, the subject matter of any one or more of Examples 21-27 optionally include wherein the processing circuitry is further configured to: estimate a number of UEs for the service identifier; and determine a size of the group of IP addresses based upon the estimated number of UEs.

In Example 29, the subject matter of any one or more of Examples 21-28 optionally include wherein the processing circuitry is further configured to request the network controller provide updates to the routing policy based upon changes to the routing policy.

In Example 30, the subject matter of any one or more of Examples 21-29 optionally include wherein the routing policy comprises a plurality of routing policies, wherein each policy has a weight used to distribute data packets associated with the IP service over a plurality of data gateways, and wherein the processing circuitry is further configured to route a packet received from the first UE based upon the weights.

Example 31 is a non-transitory computer-readable medium comprising instructions to cause a network controller, upon execution of the instructions by processing circuitry of the network controller, to: receive a first request from a first user equipment (UE), the first request may be an attach or a service request comprising a first UE identifier and a requested internet protocol (IP) service with a packet data network (PDN) identified by an access point name (APN); allocate, based on the attach request, a group of IP addresses for the IP service, the group of IP addresses associated with a service identifier; configure a routing policy for the group of IP addresses; send the routing policy to a radio access network (RAN) node and a data gateway, the routing policy indicating a route for data packets, from UEs using the requested IP service, received at the RAN node to the data gateway; and store, in the memory, a mapping between the service identifier and the group of IP addresses.

In Example 32, the subject matter of Example 31 optionally includes wherein the processing circuitry is further configured to: send a second request to a subscription repository; and receive, in response to the second request, authentication parameters for the service identifier.

In Example 33, the subject matter of Example 32 optionally includes wherein the processing circuitry is further configured to: receive a third request from a second UE, the third request may be an attach or a service request comprising the requested IP service; determine the group of IP addresses associated with the requested IP service from the map; and authenticate the second UE based upon the previously received authentication parameters.

In Example 34, the subject matter of Example 33 optionally includes wherein the processing circuitry is further configured to: start a validity timer associated with the group of IP addresses upon receipt of the first request from the first UE; and verily the group of IP addresses are valid based upon the validity timer after receipt of the third request from the second UE.

In Example 35, the subject matter of any one or more of Examples 32-34 optionally include wherein the processing circuitry is further configured to send the authentication parameters to the RAN node, the authentication parameters stored and used to authenticate a second UE at the RAN node.

In Example 36, the subject matter of any one or more of Examples 31-35 optionally include prefix.

In Example 37, the subject matter of any one or more of Examples 31-36 optionally include addresses.

In Example 38, the subject matter of any one or more of Examples 31-37 optionally include wherein the processing circuitry is further configured to: estimate a number of UE for the service identifier; and determine a size of the group of IP addresses based upon the estimated number of UE.

In Example 39, the subject matter of any one or more of Examples 31-38 optionally include wherein the routing policy comprises a plurality of routing policies, wherein each policy has a weight used to distribute data packets associated with the IP service over a plurality of data gateways.

Example 40 is a system to perform the operations of any of the Examples 1-19.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the disclosure is not limited in this respect. An example LTE system includes a number of mobile stations, defined by the LTE specification as User Equipment (UE), communicating with a base station, defined by the LTE specifications as an eNB.

Antennas referred to herein may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MEMO) embodiments, antennas may be effectively separated to take advantage of spatial diversity and the different channel characteristics that may result between each of antennas and the antennas of a transmitting station. In some MEMO embodiments, antennas may be separated by up to 1/10 of a wavelength or more.

In some embodiments, a receiver as described herein may be configured to receive signals in accordance with specific communication standards, such as the Institute of Electrical and Electronics Engineers (IEEE) standards including IEEE 802.11 standards and/or proposed specifications for WLANs, although the scope of the disclosure is not limited in this respect as they may also be suitable to transmit and/or receive communications in accordance with other techniques and standards. In some embodiments, the receiver may be configured to receive signals in accordance with the IEEE 802.16-2004, the IEEE 802.16(e) and/or IEEE 802.16(m) standards for wireless metropolitan area networks (WMANs) including variations and evolutions thereof, although the scope of the disclosure is not limited in this respect as they may also be suitable to transmit and/or receive communications in accordance with other techniques and standards. In some embodiments, the receiver may be configured to receive signals in accordance with the Universal Terrestrial Radio Access Network (UTRAN) LTE communication standards. For more information with respect to the IEEE 802.11 and IEEE 802.16 standards, please refer to "IEEE Standards for Information Technology - Telecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, including variations and evolutions thereof.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims, along with the full scope of equivalents to which such claims are entitled.

## Claims

1. A method, comprising:
at a core network control plane function (130):
storing a mapping between a network slice and a pool of IP addresses;
selecting a first core network user plane function serving a first network slice, wherein the first network slice is allocated a first pool of IP addresses;
selecting a second core network user plane function serving a second network slice, wherein the second network slice is allocated a second pool of IP addresses;
allocating a first IP address from the first pool of IP addresses to a first device; and
allocating a second IP address from the second pool of IP addresses to a second device.

2. The method of claim 1, wherein the first and second core network user plane function are the same function.

3. The method of claim 1, wherein the first and second core network user plane function are different functions.

4. The method of claim 1, wherein the IP addresses include IPv4 address.

5. The method of claim 1, wherein the IP addresses include IPv6 prefixes.

6. The method of claim 1, wherein configuration polices are based on the allocated IP addresses.

7. The method of claim 1, further comprising receiving an attach request from a first user equipment, UE (212).

8. The method of claim 7, further comprising sending the attach request to a subscription repository (222).

9. The method of claim 8, further comprising receiving, in response to the attach request, authentication parameters.

10. The method of claim 9, further comprising authenticating the first UE based upon the authentication parameters.

11. The method of claim 9, further comprising receiving a second attach request from a second UE (212).

12. The method of claim 9, further comprising sending the authentication parameters to a radio access network, RAN, node (214), wherein the authentication parameters are useable to authenticate a second UE (212).

13. The method of claim 1, further comprising estimating a number of UEs associated with a service identifier.

14. An apparatus, comprising:
a processor configured to cause a core network control plane function (130) to implement a method according to any of the proceeding claims.

15. The apparatus of claim 14, further comprising a control plane interface.
